(19) Europäisches Patentamt
European Patent Office
Office européen des brevets

(11) EP 4 749 337 A1

(12) # EUROPEAN PATENT APPLICATION
published in accordance with Art. 153(4) EPC

(43) Date of publication:
**27.05.2026 Bulletin 2026/22**

(21) Application number: **24843214.8**

(22) Date of filing: **22.07.2024**

(51) International Patent Classification (IPC):
***G02B 5/30*** *(2006.01)*

(52) Cooperative Patent Classification (CPC):
**G02B 5/30**

(86) International application number:
**PCT/JP2024/026182**

(87) International publication number:
**WO 2025/018426 (23.01.2025 Gazette 2025/04)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: **20.07.2023 JP 2023118342**

(71) Applicant: **FUJIFILM Corporation**
**Tokyo 106-8620 (JP)**

(72) Inventors:
- **TAKAYAMA, Teru**
**Minamiashigara-shi, Kanagawa 250-0193 (JP)**
- **WATANABE, Shinya**
**Minamiashigara-shi, Kanagawa 250-0193 (JP)**
- **ARITA, Shusuke**
**Minamiashigara-shi, Kanagawa 250-0193 (JP)**
- **YAMAMOTO, Aiko**
**Minamiashigara-shi, Kanagawa 250-0193 (JP)**
- **GOTO, Ryoji**
**Minamiashigara-shi, Kanagawa 250-0193 (JP)**
- **FUKUDA, Yui**
**Minamiashigara-shi, Kanagawa 250-0193 (JP)**

(74) Representative: **HGF**
**HGF Limited**
**4th Floor, 1 City Square**
**Leeds LS1 2ES (GB)**

(54) **METHOD FOR PRODUCING CHOLESTERIC LIQUID CRYSTAL LAYER, CHOLESTERIC LIQUID CRYSTAL LAYER, REFLECTIVE FILM, LAMINATED GLASS, HEAD-UP DISPLAY SYSTEM, AND COMPOSITION**

(57) A first object of the present invention is to provide a method for producing a cholesteric liquid crystal layer, by which a cholesteric liquid crystal layer that is less likely to undergo a change in reflection spectrum in a case where a heating treatment is carried out in a state where an adjacent layer is arranged on a surface of the cholesteric liquid crystal layer can be easily produced. In addition, a second object of the present invention is to provide a cholesteric liquid crystal layer, a reflective film, a laminated glass, a head-up display system, and a composition. The method for producing a cholesteric liquid crystal layer of an embodiment of the present invention includes a step 1 of forming a composition layer including liquid crystal compounds having a polymerizable group, a first polymerizable chiral agent that undergoes a change in helical twisting power by light irradiation, and a second polymerizable chiral agent; a step 2 of aligning the liquid crystal compounds; a step 3 of irradiating the composition layer with light having a wavelength that enables the helical twisting power of the first polymerizable chiral agent to change, under predetermined conditions; and a step 4 of subjecting the composition layer to a curing treatment to form a cholesteric liquid crystal layer, in which the composition layer is subjected to a heating treatment between the step 3 and the step 4, or in the step 3.

EP 4 749 337 A1

FIG. 1

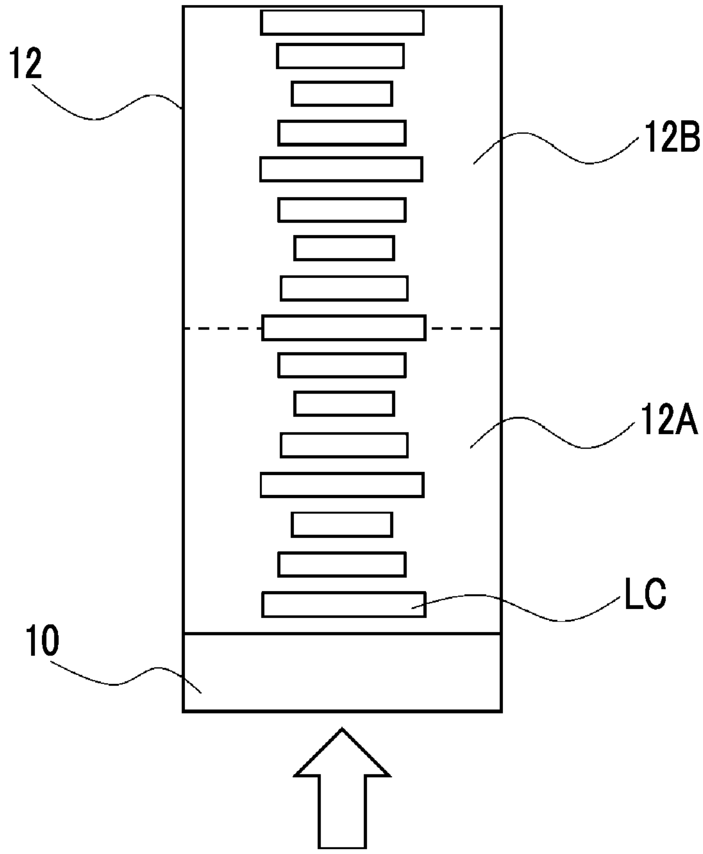

## Description

## BACKGROUND OF THE INVENTION

1. Field of the Invention

The present invention relates to a method for producing a cholesteric liquid crystal layer, a cholesteric liquid crystal layer, a reflective film, a laminated glass, a head-up display system, and a composition.

2. Description of the Related Art

Recently, a so-called head-up display system in which a projector projects various kinds of information in the form of an image onto a windshield glass or the like to transmit the information to a driver has been developed as one of in-vehicle displays.

As the head-up display system, for example, a reflective film including a cholesteric liquid crystal layer that exhibits circularly polarized light-selective reflection is known to be incorporated into a windshield glass. In addition, in order to provide a reflection spectrum having a wide reflection band over a visible range, the cholesteric liquid crystal layer is often configured by laminating a plurality of cholesteric liquid crystal layers having different central reflection wavelengths (in other words, different helical pitch sizes derived from the liquid crystal compound). Furthermore, in a production step of incorporating the reflective film into glass, typically, the reflective film and the glass constituting the windshield glass are laminated through a pressure-sensitive adhesive layer (optical clear adhesive (OCA) layer) or a heat seal layer, and the laminate is subjected to a heating treatment.

Meanwhile, for example, WO2022/030266A discloses a simple method for producing an optically anisotropic layer, in which the alignment state of liquid crystal compounds is immobilized, and which includes a plurality of regions in which the alignment states of the liquid crystal compounds are different along the thickness direction. More specifically, a method for collectively forming a laminate having two optically anisotropic layers consisting of a rod-like liquid crystal composition in one coating step is disclosed.

## SUMMARY OF THE INVENTION

With reference to the method for producing an optically anisotropic layer described in WO2022/030266A, the present inventors have studied a production method for collectively forming a cholesteric liquid crystal layer having a plurality of regions in which the helical pitches are different along the thickness direction. As a result, they have found that in a case where a heating treatment is carried out in a state where an adjacent layer such as a pressure-sensitive adhesive layer and a heat seal layer is arranged on a surface of the obtained cholesteric liquid crystal layer, the reflection spectrum of the cholesteric liquid crystal layer may change before and after the heating, and thus, reflected light in a desired color may not be obtained.

Therefore, an object of the present invention is to provide a method for producing a cholesteric liquid crystal layer, by which a cholesteric liquid crystal layer that is less likely to undergo a change in reflection spectrum in a case where a heating treatment is carried out in a state where an adjacent layer is arranged on a surface of the cholesteric liquid crystal layer can be easily produced.

In addition, another object of the present invention is to provide a cholesteric liquid crystal layer, a reflective film, a laminated glass, a head-up display system, and a composition.

The present inventors have found that the objects can be accomplished by the following configurations.

(1) A method for producing a cholesteric liquid crystal layer, the method including:

a step 1 of forming a composition layer including liquid crystal compounds having a polymerizable group, a first polymerizable chiral agent that undergoes a change in helical twisting power by light irradiation, and a second polymerizable chiral agent having helicity in a direction opposite to a direction of the first polymerizable chiral agent;
a step 2 of aligning the liquid crystal compounds in the composition layer;
a step 3 of irradiating the composition layer with light having a wavelength that enables the helical twisting power of the first polymerizable chiral agent to change, under a condition of an oxygen concentration of 1% by volume or more; and
a step 4 of subjecting the composition layer to a curing treatment to immobilize an alignment state of the liquid crystal compounds and to form a cholesteric liquid crystal layer having a plurality of regions in which helical pitches are different along a thickness direction,

in which the method includes a step 5 of subjecting the composition layer to a heating treatment between the step 3 and the step 4, or includes subjecting the composition layer to a heating treatment during the light irradiation in the step 3.

(2) The method for producing a cholesteric liquid crystal layer according to (1),
in which the first polymerizable chiral agent and the second polymerizable chiral agent each have two or more polymerizable groups.
(3) The method for producing a cholesteric liquid crystal layer according to (1) or (2),
in which the first polymerizable chiral agent and the second polymerizable chiral agent include a partial structure selected from the group consisting of an isosorbide partial structure, an isomannide partial structure, and a binaphthyl partial structure.
(4) The method for producing a cholesteric liquid crystal layer according to any one of (1) to (3),
in which the first polymerizable chiral agent has a photoisomerizable double bond in a molecule.
(5) The method for producing a cholesteric liquid crystal layer according to any one of (1) to (4),
in which the first polymerizable chiral agent includes a photoisomerization moiety selected from the group consisting of a cinnamoyl moiety, a chalcone moiety, and a stilbene moiety.
(6) The method for producing a cholesteric liquid crystal layer according to any one of (1) to (5),
in which a thickness of the cholesteric liquid crystal layer is 10 μm or less.
(7) A cholesteric liquid crystal layer formed by immobilizing a cholesteric liquid crystalline phase, the cholesteric liquid crystal layer including:

a plurality of regions in which helical pitches are different along a thickness direction,
in which the cholesteric liquid crystal layer is a layer formed of a composition including liquid crystal compounds having a polymerizable group, a first polymerizable chiral agent that undergoes a change in helical twisting power by light irradiation, and a second polymerizable chiral agent having helicity in a direction opposite to a direction of the first polymerizable chiral agent.

(8) A reflective film including:
the cholesteric liquid crystal layer according to (7).
(9) A reflective film including, in the following order:

a first retardation layer;
the cholesteric liquid crystal layer according to (7); and
a second retardation layer.

(10) The reflective film according to (9),
in which an average value of reflectivity at an incidence angle of 5° in a wavelength range of 400 to 800 nm is 15% or less.
(11) The reflective film according to (9) or (10),
in which an average transmittance in a wavelength range of 380 to 420 nm is 50% or more.
(12) A laminated glass including, in the following order:

a first glass plate;
the reflective film according to any one of (8) to (11); and
a second glass plate.

(13) The laminated glass according to (12),
in which a heat seal layer or a pressure-sensitive adhesive layer is provided between the first glass plate and the reflective film or between the second glass plate and the reflective film.
(14) A laminated glass including, in the following order:

a first glass plate;
an interlayer film;
a second glass plate; and
the reflective film according to any one of (8) to (11).

(15) The laminated glass according to (14),
in which a heat seal layer or a pressure-sensitive adhesive layer is provided between the second glass plate and the

reflective film.

(16) A head-up display system including:

- a windshield glass consisting of the laminated glass according to any one of (12) to (15); and
- a projector that irradiates the windshield glass with projection light.

(17) The head-up display system according to (16),
in which the projector irradiates the windshield glass with P-polarized projection light.

(18) A composition including:

- liquid crystal compounds having a polymerizable group;
- a first polymerizable chiral agent that undergoes a change in helical twisting power by light irradiation; and
- a second polymerizable chiral agent having helicity in a direction opposite to a direction of the first polymerizable chiral agent.

According to the present invention, it is possible to provide a method for producing a cholesteric liquid crystal layer, by which a cholesteric liquid crystal layer that is less likely to undergo a change in reflection spectrum in a case where a heating treatment is carried out in a state where an adjacent layer is arranged on a surface of the cholesteric liquid crystal layer can be easily produced.

In addition, according to the present invention, it is also possible to provide a cholesteric liquid crystal layer, a reflective film, a laminated glass, a head-up display system, and a composition.

## BRIEF DESCRIPTION OF THE DRAWINGS

FIG. 1 is a cross-sectional view of a composition layer for explaining an example of a step 2 in a method for producing a cholesteric liquid crystal layer of an embodiment of the present invention.

FIG. 2 shows a schematic view of a graph in which a relationship between a helical twisting power ($\mu m^{-1}$) × a concentration (% by mass) and a light irradiation amount ($mJ/cm^2$) is plotted for each of a first polymerizable chiral agent and a second polymerizable chiral agent.

FIG. 3 shows a schematic view of a graph in which a relationship between a weighted average helical twisting power ($\mu m^{-1}$) of the first polymerizable chiral agent and the second polymerizable chiral agent and a light irradiation amount ($mJ/cm^2$) is plotted.

FIG. 4 is a cross-sectional view of a composition layer for explaining an example of a case where a composition layer 12 after light irradiation in a step 3 is subjected to a step 5.

FIG. 5 is a schematic view of a graph in which a relationship between a weighted average helical twisting power ($\mu m^{-1}$) of the first polymerizable chiral agent and the second polymerizable chiral agent and the light irradiation amount ($mJ/cm^2$) is plotted.

FIG. 6 is a schematic cross-sectional view showing an example of a configuration of a reflective film.

FIG. 7 is a schematic cross-sectional view showing another example of a configuration of a laminated glass.

FIG. 8 is a schematic cross-sectional view showing another example of a configuration of a laminated glass.

FIG. 9 is a schematic view showing an example of a configuration of a head-up display.

## DESCRIPTION OF THE PREFERRED EMBODIMENTS

Hereinafter, the present invention will be described in detail. Furthermore, in the present specification, a numerical value range expressed using "to" means a range that includes the preceding and succeeding numerical values of "to" as a lower limit value and an upper limit value, respectively. First, terms used in the present specification will be described.

Unless otherwise specified, the term "light" in the description of the production method in the present specification means an actinic ray or radiation, for example, an emission line spectrum of a mercury lamp, far ultraviolet rays typified by an excimer laser, extreme ultraviolet rays (EUV rays), an X-ray, ultraviolet rays, or electron beams (EB). Among these, the ultraviolet rays are preferable.

Unless otherwise specified, the term "light" in the description in portions other than the production method in the present specification means visible light and natural light (non-polarized light).

In the present specification, the term "visible light" means light in a wavelength range of 380 to 780 nm. In addition, in the present specification, in a case where a measurement wavelength is not particularly specified, it is 550 nm unless

otherwise specified.

Furthermore, in the visible light, light in a wavelength range of 420 to 490 nm refers to blue light (B), light in a wavelength range of 495 to 570 nm refers to green light (G), and light in a wavelength range of 620 to 750 nm refers to red light (R).

In the present specification, the term "invisible light" means light in a wavelength range of less than 380 nm or a wavelength range of more than 780 nm.

In the present specification, the cholesteric liquid crystalline phase is a phase having a periodic structure in which liquid crystal compounds are helically aligned, and has a twisted angle of 360° or more. In addition, in a case where the liquid crystal compounds are twistedly aligned in another optically anisotropic layer which is other than the cholesteric liquid crystalline phase, the twisted angle is preferably more than 0° and less than 360°.

In the present specification, unless otherwise specified, terms related to angles, such as "angle represented by a specific numerical value", "parallel", "horizontal", "perpendicular", and "orthogonal", include an error range that is generally allowed in the corresponding technical field. Specifically, the terms mean that the angle is within a range of the exact angle ±10° or less. The error from the exact angle is preferably with ±7° or less, and more preferably within ±5° or less.

In the present specification, unless otherwise specified, the terms "same" and "entire surface" include an error range that is generally allowed in the corresponding technical field.

In the present specification, the term "visible light transmittance" is a visible light transmittance of an A light source defined in JIS (Japanese Industrial Standards) R 3212: 2015 (Test methods of safety glazing materials for road vehicles). That is, the transmittance is determined by measuring a transmittance of each wavelength in a range of 380 to 780 nm with a spectrophotometer using the A light source, multiplying a wavelength distribution of International Commission on Illumination (CIE) photopic spectral luminous efficiency function and pre-calculated weighting functions obtained from an interval wavelength by the transmittance at each wavelength, and performing weighted averaging.

In a case of simply referring to the term "reflected light" or "transmitted light", the term is used to have meanings including scattered light and diffracted light.

In the present specification, the term "P-polarized light" means polarized light that vibrates in a direction parallel to an incidence plane of light, and the term "S-polarized light" means polarized light that vibrates in a direction orthogonal to the incidence plane of light. In addition, the term "incidence plane" means a surface that is perpendicular to a reflecting surface (such as a surface of windshield glass), and includes incident rays and reflected rays. Furthermore, in the P-polarized light, a vibration plane of the electric field vector is parallel to the incidence plane, and in the S-polarized light, a vibration plane of the electric field vector is perpendicular to the incidence plane.

In the present specification, the in-plane retardation is a value measured using AxoScan manufactured by Axometrics, Inc. Unless otherwise specified, the measurement wavelength is set to 550 nm. Furthermore, as the in-plane retardation, a value measured by causing light at a wavelength in a visible light wavelength range to be incident in a film normal direction is used.

In the present specification, the term "projection image" means an image based on projection of light from a projector to be used, which is not a surrounding scenery such as that in front of the viewer. The projection image is visually recognized by an observer as a virtual image that appears to float in front of a windshield glass as viewed from the observer.

In the present specification, the term "screen image" means an image displayed on a drawing device of the projector or an image drawn on an intermediate image screen or the like by the drawing device. The screen image is a real image, whereas the projection image is a virtual image. Furthermore, both the screen image and the projection image may be monochrome images, may be multicolor images with two or more colors, or may be full color images.

In the present specification, the term "first and second" in the first glass plate and the second glass plate have no technical meaning, and are provided for convenience in order to distinguish between the two glass plates. It should be noted that in the following description, in a case where the laminated glass is used as a windshield glass in a transport vehicle, the first glass plate is described as a vehicle exterior side and the second glass plate is described as a vehicle interior side.

In addition, in the present specification, the "solid content" of a composition means components that form a cholesteric liquid crystal layer formed of the composition, and in a case where the composition includes a solvent (an organic solvent, water, and the like), all components excluding the solvent. In addition, a liquid component is also regarded as the solid content as long as it is a component that forms the cholesteric liquid crystal layer.

[Method for Producing Cholesteric Liquid Crystal Layer]

A method for producing a cholesteric liquid crystal layer of an embodiment of the present invention (hereinafter referred to as "the production method of the embodiment of the present invention") includes:

a step 1 of forming a composition layer including liquid crystal compounds having a polymerizable group (hereinafter

also referred to as a "polymerizable liquid crystal compound"), a first polymerizable chiral agent that undergoes a change in helical twisting power by light irradiation (hereinafter simply referred to as a "first polymerizable chiral agent"), and a second polymerizable chiral agent having helicity in a direction opposite to a direction of the first polymerizable chiral agent (hereinafter simply referred to as a "second polymerizable chiral agent"),
a step 2 of aligning the liquid crystal compounds in the composition layer,
a step 3 of irradiating the composition layer with light having a wavelength that enables the helical twisting power of the first polymerizable chiral agent to change, under a condition of an oxygen concentration of 1% by volume or more, and
a step 4 of subjecting the composition layer to a curing treatment to immobilize an alignment state of the liquid crystal compounds and to form a cholesteric liquid crystal layer having a plurality of regions in which helical pitches are different along a thickness direction,
in which the method includes a step 5 of subjecting the composition layer to a heating treatment between the step 3 and the step 4, or includes subjecting the composition layer to a heating treatment during the light irradiation in the step 3.

In a case where a heating treatment is carried out in a state where an adjacent layer is arranged on a surface of the cholesteric liquid crystal layer obtained by the production method of the embodiment of the present invention, a change in reflection spectrum is less likely to occur. Hereinafter, an action mechanism presumed to be a feature of the production method of the embodiment of the present invention will be described.

First, one of the features of the production method of the embodiment of the present invention is that a predetermined step is carried out.

As will be described in detail later, in the present invention, first, the polymerizable liquid crystal compounds in the composition layer are aligned (step 2). Furthermore, in the step 2, typically, a cholesteric liquid crystal layer can be formed.

In the step 3, in a part of a region of the composition layer on a substrate (support member of the composition layer) side, the oxygen concentration is low, and in another part of the region on the surface side opposite to the substrate side, the oxygen concentration is high. Therefore, in such a composition layer, in a case where the composition layer is irradiated with light having a wavelength that enables the helical twisting power of the first polymerizable chiral agent to change, in a region in which the oxygen concentration is high, the change in helical twisting power (for example, photoisomerization and photodimerization) of the first polymerizable chiral agent proceeds, but the polymerization of the polymerizable liquid crystal compound, the first polymerizable chiral agent, and the second polymerizable chiral agent is less likely to proceed due to oxygen inhibition, whereas in a region in which the oxygen concentration is low, the polymerization reaction of the polymerizable components such as the polymerizable liquid crystal compound, the first polymerizable chiral agent, and the second polymerizable chiral agent is more likely to proceed. In addition, in the region in which the oxygen concentration is low, the change in helical twisting power (for example, photoisomerization and photodimerization) of the first polymerizable chiral agent occurs, but the progress rate of the polymerization reaction is faster. As a result, the alignment state of the liquid crystal compounds can be immobilized before a change in alignment state of the liquid crystal compounds occurs due to the change in helical twisting power of the first polymerizable chiral agent.

Then, in the curing treatment in the step 4, the liquid crystal compounds are immobilized in the region in which the oxygen concentration is high and the polymerization reaction is less likely to proceed in the step 3. As a result, a cholesteric liquid crystal layer having a plurality of regions whose helical pitches are different along the thickness direction is produced.

In addition, another feature of the production method of the embodiment of the present invention may be that the chiral agent has a polymerizable group.

The present inventors have presumed that in a case where an adjacent layer is arranged on a surface of a cholesteric liquid crystal layer formed of a chiral agent having no polymerizable group to carry out a heating treatment, the non-immobilized chiral agent present in the cholesteric liquid crystal layer moves between layers to the adjacent layer having a lower chiral agent concentration, and as a result, the helical pitch may be reduced due to a decrease in volume of the cholesteric liquid crystal layer, resulting in a change in reflection spectrum.

In the method for producing the cholesteric liquid crystal layer of the embodiment of the present invention, since a polymerizable chiral agent such as the first polymerizable chiral agent and the second polymerizable chiral agent is immobilized in the cholesteric liquid crystal layer, the change in reflection spectrum is less likely to occur even in a case where the adjacent layer is arranged on the surface of the cholesteric liquid crystal layer to carry out a heating treatment.

Hereinafter, in a case where a heating treatment is carried out in a state where an adjacent layer is arranged on a surface of the cholesteric liquid crystal layer, a change in reflection spectrum is less likely to occur, which may also be referred to as indicating that the effect of the present invention is more excellent.

Hereinafter, each of the steps in the production method of the embodiment of the present invention will be described.

[Step 1]

The step 1 is a step of forming a composition layer including a polymerizable liquid crystal compound, a first polymerizable chiral agent, and a second polymerizable chiral agent. By carrying this step, a composition layer to be subjected to a light irradiation treatment which will be described later is formed.
Hereinbelow, first, materials used in this step will be described in detail, and then the procedure of the step will be described in detail.

<Chiral Agent>

(First Polymerizable Chiral Agent)

The composition layer in the step 1 includes the first polymerizable chiral agent. The first polymerizable chiral agent is a chiral agent that has a polymerizable group, and has a change in helical twisting power by light irradiation.
Hereinafter, the first polymerizable chiral agent will be described in detail.
Furthermore, the helical twisting power (HTP) of the chiral agent is a factor indicating a helical alignment ability expressed by Expression (A).

HTP = 1/(Length (unit: $\mu$m) of helical pitch $\times$ Concentration (% by mass) of chiral agent with respect to liquid crystal compound) [$\mu m^{-1}$] Expression (A)

The length of the helical pitch refers to a length of a pitch P (= a period of the helix) of the helical structure of the cholesteric liquid crystalline phase, and can be measured by the method described in Liquid Crystal Handbook (published by Maruzen Co., Ltd.), p. 196.
A type of the polymerizable group contained in the first polymerizable chiral agent is not particularly limited, but is preferably a functional group capable of an addition polymerization reaction, more preferably a polymerizable ethylenic unsaturated group or a ring-polymerizable group, and still more preferably a (meth)acryloyl group, a vinyl group, a styryl group, or an allyl group.
The number of the polymerizable groups contained in the first polymerizable chiral agent is not particularly limited, but is, for example, preferably 1 to 6, more preferably 2 to 4, and still more preferably 2.
The first polymerizable chiral agent may be liquid crystalline or non-liquid crystalline. The first polymerizable chiral agent generally includes an asymmetric carbon atom in many cases. Furthermore, the first polymerizable chiral agent may be an axially chiral compound or planar chiral compound, which does not include an asymmetric carbon atom.
The first polymerizable chiral agent may be a chiral agent that undergoes an increase in helical twisting power by light irradiation, or may be a chiral agent that undergoes a decrease in helical twisting power by light irradiation. Among these, the chiral agent that undergoes a decrease in helical twisting power by light irradiation is preferable.
Furthermore, "the increase and the decrease in helical twisting power" in the present specification represent an increase and a decrease in helical twisting power, respectively, in a case where an initial helical direction (helical direction before light irradiation) of the first polymerizable chiral agent is defined as "positive". Accordingly, even in a case where the helical twisting power continues to decrease and goes below zero by light irradiation, and thus, the helical direction is "negative" (that is, even in a case where a chiral agent induces a helix in a helical direction opposite to an initial helical direction (helical direction before light irradiation)), such a chiral agent also corresponds to the "chiral agent that undergoes a decrease in helical twisting power".
Examples of the first polymerizable chiral agent include a so-called photoreactive chiral agent. The photoreactive chiral agent is a compound which has a chiral moiety and a photoreactive moiety that undergoes a structural change by light irradiation and which greatly changes a twisting force of a liquid crystal compound in accordance with an irradiation amount, for example.
Examples of the photoreactive moiety that undergoes a structural change by light irradiation include photochromic compounds (written by Kingo Uchida and Masahiro Irie, Chemical Industry, Vol. 64, p. 640, 1999, and written by Kingo Uchida and Masahiro Irie, Fine Chemical, Vol. 28(9), p. 15, 1999). Moreover, the structural change means decomposition, addition reaction, isomerization, racemization, [2 + 2] photocyclization, dimerization reaction, or the like occurred by irradiating a photoreactive moiety with light, and the structural change may be irreversible. In addition, the chiral moiety corresponds to, for example, the asymmetric carbon described in Hiroyuki Nohira, Chemical Review, No. 22, Chemistry of Liquid Crystals, p. 73, 1994.
Among these, the first polymerizable chiral agent is preferably a compound having at least a photoisomerization moiety, and the photoisomerization moiety more preferably has a photoisomerizable double bond. The photoisomerization moiety having a photoisomerizable double bond is preferably a cinnamoyl moiety, a chalcone moiety, an azobenzene

moiety, or a stilbene moiety from the viewpoint that photoisomerization easily occurs and the difference in helical twisting power before and after light irradiation is large; and more preferably the cinnamoyl moiety, the chalcone moiety, or the stilbene moiety from the viewpoint that the absorption of visible light is small. Furthermore, the photoisomerization moiety corresponds to the above-mentioned photoreactive moiety that undergoes a structural change by light irradiation.

Moreover, from the viewpoint that the initial (before light irradiation) helical twisting power is high and the change amount of the helical twisting power by light irradiation is more excellent, it is preferable that the first polymerizable chiral agent has a trans-type photoisomerizable double bond.

In addition, from the viewpoint that the initial (before light irradiation) helical twisting power is low and the change amount of the helical twisting power by light irradiation is more excellent, it is preferable that the first polymerizable chiral agent has a cis-type photoisomerizable double bond.

The first polymerizable chiral agent preferably has any partial structure selected from a binaphthyl partial structure, an isosorbide partial structure (a partial structure derived from isosorbide), and an isomannide partial structure (a partial structure derived from isomannide). Furthermore, the binaphthyl partial structure, the isosorbide partial structure, and the isomannide partial structure are intended to have the following structures, respectively.

The portion of the binaphthyl partial structure in which the solid line and the broken line are parallel to each other represents a single bond or a double bond. Furthermore, in the structures shown below, * represents a bonding position.

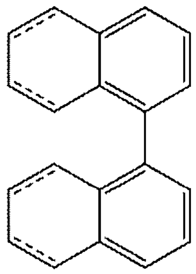
Binaphthyl partial structure

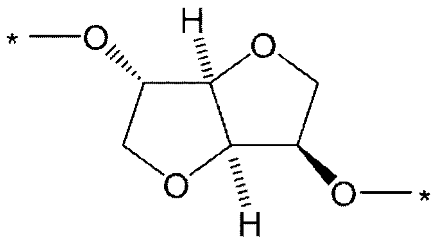
Isosorbide partial structure

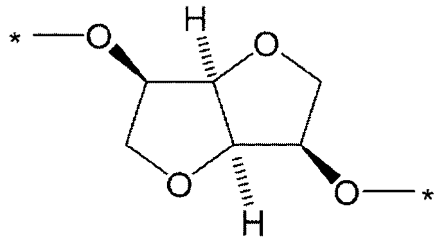
Isomannide partial structure

The first polymerizable chiral agent is preferably a compound represented by Formula (CA).

Formula (CA) $P^1\text{-}sp^1\text{-}(A^1\text{-}Z^1)_m\text{-}L^1\text{-}(Z^2\text{-}A^2)_n\text{-}sp^2\text{-}P^2$

$L^1$ represents a divalent linking group formed by removing two hydrogen atoms from a structure represented by Formula (D) (a divalent linking group formed by removing two hydrogen atoms from the binaphthyl partial structure), a divalent linking group represented by Formula (E) (a divalent linking group consisting of the isosorbide partial structure), or a divalent linking group represented by Formula (F) (a divalent linking group consisting of the isomannide partial structure).

$Z^1$ and $Z^2$ each represent a single bond or a divalent linking group.

As the divalent linking group represented by each of $Z^1$ and $Z^2$, it is preferable to represent -O-, -S-, -CHRCHR-, -OCHR-, -CO-, -SO-, $-SO_2-$, -COO-, -CO-S-, -O-CO-O-, -CO-NR-, -SCHR-, -SO-CHR-, $-SO_2-CHR-$, $-CF_2O-$, $-CF_2S-$, -OCHRCHR-O-, -SCHRCHRS-, -SO-CHRCHR-SO-, $-SO_2-CHRCHR-SO_2-$, -CR=CR-CO-, -CR=CR-COO-, -CR=CR-OCO-,-CR=CR-CONR-, -CR=CR-COS-, -COO-CHRCHR-, -OCO-CHRCHR-, -COO-CHR-, -OCO-CHR-, -CR=CR-, -CR=N-, -N=CR-, -N=N-, -CR=N-N=CR-, -CF=CF-, or -C=C-. R represents a hydrogen atom, a cyano group, or an alkyl group having 1 to 10 carbon atoms. Furthermore, in the formula, in a case where a plurality of R's are present, the plurality of R's may be the same as or different from each other.

In the formula, in a case where a plurality of $Z^1$'s are present, the plurality of $Z^1$'s may be the same as or different from each other. In addition, in the formula, in a case where a plurality of $Z^2$'s are present, the plurality of $Z^2$'s may be the same as or different from each other.

Moreover, it is preferable that at least one of the plurality of $Z^1$'s or the plurality of $Z^2$'s represents a divalent linking group selected from the group consisting of -CR=CR-CO-,-CR=CR-COO-, -CR=CR-OCO-, -CR=CR-CONR-, -CR=CR-COS-, -CR=CR-, -N=N-, and-CF=CF-, and it is more preferable that at least one of the plurality of $Z^1$'s or at least one of the plurality of $Z^2$'s represents a divalent linking group selected from the group consisting of-CR=CR-CO-, -CR=CR-COO-, -CR=CR-OCO-, -CR=CR-CONR-, -CR=CR-COS-, -CR=CR-, -N=N-, and -CF=CF-.

$A^1$ and $A^2$ each independently represent a divalent aromatic ring group which may have a substituent or a divalent alicyclic group which may have a substituent.

Examples of the divalent aromatic ring group represented by each of $A^1$ and $A^2$ include a divalent aromatic

hydrocarbon ring group and a divalent aromatic heterocyclic group.

The aromatic hydrocarbon ring constituting the divalent aromatic hydrocarbon ring group may be a monocyclic ring or a polycyclic ring. In addition, the number of carbon atoms in the aromatic hydrocarbon ring is preferably 6 to 20, and more preferably 6 to 10. Specific examples of the aromatic hydrocarbon ring include a benzene ring and a naphthalene ring, and the benzene ring is more preferable.

The number of ring members in the aromatic heterocyclic ring constituting the divalent aromatic heterocyclic group is preferably 5 to 10, and more preferably 5 or 6. Examples of the heteroatom included in the aromatic heterocyclic group include a nitrogen atom, an oxygen atom, and a sulfur atom. In addition, the number of carbon atoms in the aromatic heterocyclic ring is preferably 3 to 20, and more preferably 3 to 10. Specific examples of the aromatic heterocyclic ring include a pyridine ring, a pyridazine ring, a pyrimidine ring, a pyrazine ring, a triazine ring, a thiophene ring, a thiazole ring, and an imidazole ring.

As the divalent aromatic ring group represented by each of $A^1$ and $A^2$, the divalent aromatic hydrocarbon ring group is preferable, and a divalent benzene ring group or a divalent naphthalene ring group is more preferable.

Examples of the divalent alicyclic group represented by each of $A^1$ and $A^2$ include a divalent aliphatic hydrocarbon ring group and a divalent aliphatic heterocyclic group.

The aliphatic hydrocarbon ring constituting the divalent aliphatic hydrocarbon ring group may be a monocyclic ring or a polycyclic ring.

The number of ring members in the aliphatic hydrocarbon ring is preferably 3 to 20, more preferably 3 to 10, and still more preferably 5 or 6. Specific examples of the aliphatic hydrocarbon ring include a cyclopentane ring, a cyclohexane ring, a cycloheptane ring, a cyclooctane ring, a norbornene ring, and an adamantane ring. Among these, the cyclopentane ring or the cyclohexane ring is preferable.

The aliphatic heterocyclic ring constituting the divalent aliphatic heterocyclic group may be a monocyclic ring or a polycyclic ring.

Examples of the heteroatom included in the aliphatic heterocyclic ring include a nitrogen atom, an oxygen atom, and a sulfur atom. The number of ring members of the aliphatic heterocyclic ring is not particularly limited, but is preferably 5 to 10. Specific examples of the aliphatic heterocyclic ring include an oxolane ring, an oxane ring, a piperidine ring, and a piperazine ring. Furthermore, in the aliphatic heterocyclic ring, $-CH_2-$ constituting the ring may be substituted with -CO-, and examples thereof include a phthalimide ring.

A substituent which may be included in $A^1$ and $A^2$ is not particularly limited, and examples thereof include an alkyl group.

$sp^1$ and $sp^2$ each independently represent an alkylene group having 1 to 12 carbon atoms, in which at least one of $-CH_2-$'s may be substituted with -O-, -CO-, $-NR^X-$, or -S-. $R^X$ represents a hydrogen atom or an alkyl group (preferably an alkyl group having 1 to 6 carbon atoms).

As $sp^1$ and $sp^2$, an alkylene group having 1 to 8 carbon atoms, in which at least one of $-CH_2-$'s may be substituted with -O-, -CO-, $-NR^X-$, or -S-, is preferable, and an alkylene group having 1 to 6 carbon atoms, in which at least one of $-CH_2-$'s may be substituted with -O-, -CO-, $-NR^X-$, or -S-, is more preferable.

m and n each independently represent an integer of 1 to 10, and are more preferably 1 to 8, still more preferably 1 to 6, and particularly preferably 2 to 6.

In Formula (CA), examples of each of $P^1$ and $P^2$ include a hydrogen atom and a monovalent substituent. It should be noted that at least one of $P^1$ or $P^2$ represents a polymerizable group, and it is preferable that both of $P^1$ and $P^2$ represent a polymerizable group. Furthermore, examples of the polymerizable group include the above-described polymerizable groups.

It should be noted that at least one of the structural moiety represented by $-(A^1-Z^1)m-$ or the structural moiety represented by $-(Z^2-A^2)n-$ in Formula (CA) includes at least one moiety selected from the group consisting of a cinnamoyl moiety (specifically a moiety represented by $-A^1-CR=CR-CO-$ or $-A^2-CR=CR-CO-$), a chalcone moiety (specifically a moiety represented by $-A^1-CR=CR-CO-A^1-$ or $-A^2-CR=CR-CO-A^2-$), an azobenzene moiety (specifically a moiety represented by $-A^1-N=N-A^1-$ or $-A^2-N=N-A^2-$), and a stilbene moiety (specifically a moiety represented by $-A^1-CR=CR-A^1-$ or $-A^2-CR=CR-A^2-$). The structural moiety including the cinnamoyl moiety may be a -cinnamoyl moiety-O- (specifically a moiety represented by $-A^1-CR=CR-CO-O-$ or $-A^2-CR=CR-CO-O-$).

Furthermore, in Formula (CA), in a case where m is an integer of 2 or more, the plurality of $Z^1$'s and the plurality of $A^1$'s may be the same as or different from each other. In addition, in a case where n is an integer of 2 or more, the plurality of $Z^2$'s and the plurality of $A^2$'s may be the same as or different from each other.

In Formulae (E) and (F), * represents a bonding position.

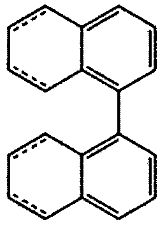

Formula (D)

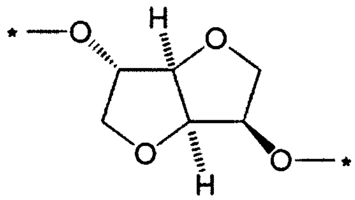

Formula (E)

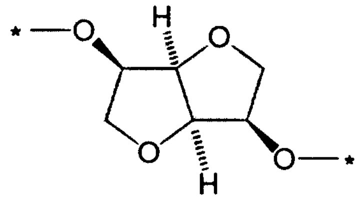

Formula (F)

Examples of the first polymerizable chiral agent include the compounds having a polymerizable group among the photoreactive chiral agents described in paragraphs 0044 to 0047 of JP2001-159709A, the optically active compounds described in paragraphs 0019 to 0043 of JP2002-179669A, the optically active compounds described in paragraphs 0020 to 0044 of JP2002-179633A, the optically active compounds described in paragraphs 0016 to 0040 of JP2002-179670A, the optically active compounds described in paragraphs 0017 to 0050 of JP2002-179668A, the optically active compounds described in paragraphs 0018 to 0044 of JP2002-180051A, the optically active isosorbide derivatives described in paragraphs 0016 to 0055 of JP2002-338575A, the photoreactive optically active compounds described in paragraphs 0023 to 0032 of JP2002-080478A, the photoreactive chiral agents described in paragraphs 0019 to 0029 of JP2002-080851A, the optically active compounds described in paragraphs 0022 to 0049 of JP2002-179681A, the optically active compounds described in paragraphs 0015 to 0044 of JP2002-302487A, the optically active polyesters described in paragraphs 0015 to 0050 of JP2002-338668A, the binaphthol derivatives described in paragraphs 0019 to 0041 of JP2003-055315A, the optically active fulgide compounds described in paragraphs 0008 to 0043 of JP2003-073381A, the optically active isosorbide derivatives described in paragraphs 0015 to 0057 of JP2003-306490A, the optically active isosorbide derivatives described in paragraphs 0015 to 0041 of JP2003-306491A, the optically active isosorbide derivatives described in paragraphs 0015 to 0049 of JP2003-313187A, the optically active isomannide derivatives described in paragraphs 0015 to 0057 of JP2003-313188A, the optically active isosorbide derivatives described in paragraphs 0015 to 0049 of JP2003-313189A, the optically active polyesters/amides described in paragraphs 0015 to 0052 of JP2003-313292A, the optically active compounds described in paragraphs 0012 to 0053 of WO2018/194157A, and the optically active compounds described in paragraphs 0020 to 0049 of JP2002-179682A.

(Second Polymerizable Chiral Agent)

The composition layer of the step 1 includes the second polymerizable chiral agent.

The second polymerizable chiral agent is a chiral agent that induces a helix in a direction opposite to that of the above-described first polymerizable chiral agent (that is, the second polymerizable chiral agent is a chiral agent having helicity in a direction opposite to that of the above-described first polymerizable chiral agent). For example, in a case where the helix induced by the first polymerizable chiral agent is in a right-handed direction, the helix induced by the second polymerizable chiral agent is in a left-handed direction.

The second polymerizable chiral agent is not particularly limited as long as it has a polymerizable group and has a helicity in a direction opposite to that of the first polymerizable chiral agent. However, among these, a chiral agent that does not undergo a change in helical twisting power by light irradiation is preferable.

Examples of the type of the polymerizable group included in the second polymerizable chiral agent include the same type as the polymerizable group included in the second polymerizable chiral agent.

The number of polymerizable groups included in the second polymerizable chiral agent is not particularly limited, but is, for example, preferably 1 to 6, more preferably 2 to 4, and still more preferably 2.

The second polymerizable chiral agent may be liquid crystalline or non-liquid crystalline. The second polymerizable chiral agent generally includes an asymmetric carbon atom in many cases. Furthermore, the second polymerizable chiral agent may be an axially chiral compound or planar chiral compound, which does not include an asymmetric carbon atom.

A known chiral agent can be used as the second polymerizable chiral agent.

The second polymerizable chiral agent is preferably a compound represented by Formula (CB).

Formula (CB) $P^3\text{-}sp^3\text{-}(A^3\text{-}Z^3)_p\text{-}L^2\text{-}(Z^4\text{-}A^4)_q\text{-}sp^4\text{-}P^4$

In Formula (CB), $L^2$ has the same definition as $L^1$ in Formula (CA), and a suitable aspect thereof is also the same.

In Formula (CB), $A^3$ and $A^4$ each have the same definition as $A^1$ in Formula (CA), and a suitable aspect thereof is

also the same.

In Formula (CB), $sp^3$ and $sp^4$ each have the same definition as $sp^1$ in Formula (CA), and a suitable aspect thereof is also the same.

In Formula (CB), $P^3$ and $P^4$ each have the same definition as $P^1$ in Formula (CA), and a suitable aspect thereof is also the same. It should be noted that at least one of $P^3$ or $P^4$ represents a polymerizable group, and it is preferable that both of $P^3$ and $P^4$ represent a polymerizable group. Furthermore, examples of the polymerizable group include the above-described polymerizable groups.

In Formula (CB), p and q each have the same definition as m in Formula (CA), and a suitable aspect thereof is also the same.

In Formula (CB), $Z^3$ and $Z^4$ each have the same definition as $Z^1$ in Formula (CA).

As the divalent linking group represented by each of $Z^3$ and $Z^4$, -O-, -S-, -CHRCHR-, -OCHR-, -CO-, -SO-, $-SO_2-$, -COO-, -CO-S-, -O-CO-O-, -CO-NR-, -SCHR-, -SO-CHR-, $-SO_2-CHR-$, $-CF_2O-$, $-CF_2S-$, -OCHRCHRO-, -SCHRCHRS-, -SO-CHRCHR-SO-, $-SO_2-CHRCHR-SO_2-$, -COO-CHRCHR-, -OCO-CHRCHR-, -COO-CHR-, or -OCO-CHR- is preferable, and-O-, -CO-, -COO-, or -CO-NR- is more preferable.

R represents a hydrogen atom, a cyano group, or an alkyl group having 1 to 10 carbon atoms. Furthermore, in the formula, in a case where a plurality of R's are present, the plurality of R's may be the same as or different from each other.

In the formula, in a case where a plurality of $Z^3$'s are present, the plurality of $Z^3$'s may be the same as or different from each other. In addition, in the formula, in a case where a plurality of $Z^4$'s are present, the plurality of $Z^4$'s may be the same as or different from each other.

A molar absorption coefficient of each of the first polymerizable chiral agent and the second polymerizable chiral agent is not particularly limited, but the molar absorption coefficient at a wavelength (for example, 365 nm) of light for irradiation in the step 3 which will be described later is preferably 100 to 100,000 L/(mol·cm), and more preferably 500 to 50,000 L/(mol·cm).

Since the helical pitch of the liquid crystal compound in the cholesteric liquid crystal layer largely depends on the types and the addition concentrations of the first polymerizable chiral agent and the second polymerizable chiral agent, it is possible to control the alignment state of the liquid crystal compounds by adjusting these factors.

In the step 1, a total content of the first polymerizable chiral agent and the second polymerizable chiral agent in the composition layer is not particularly limited, but from the viewpoint that it is easy to control the alignment state of the liquid crystal compounds, the total content is preferably more than 5.0% by mass, more preferably 5.5% by mass or more, and still more preferably 6.0% by mass or more with respect to the total mass of the liquid crystal compound. The upper limit is not particularly limited, but is preferably 25% by mass or less, more preferably 20% by mass or less, and still more preferably 15% by mass or less.

A content of the first polymerizable chiral agent is not particularly limited, but from the viewpoint of easily controlling the alignment state of the liquid crystal compounds, the content is preferably 5% to 95% by mass, more preferably 10% to 90% by mass, and still more preferably 15% to 50% by mass with respect to the total content of the first polymerizable chiral agent and the second polymerizable chiral agent.

A content of the first polymerizable chiral agent in the composition layer is not particularly limited, but is preferably 0.1% by mass or more, more preferably 0.5% by mass or more, and still more preferably 1.0% by mass or more with respect to the total mass of the composition layer. The upper limit is not particularly limited, but is preferably 10% by mass or less, more preferably 5% by mass or less, and still more preferably 3.5% by mass or less.

A content of the second polymerizable chiral agent in the composition layer is not particularly limited, but is preferably 1.0% by mass or more, more preferably 2.0% by mass or more, and still more preferably 4.0% by mass or more with respect to the total mass of the composition layer. The upper limit is not particularly limited, but is preferably 10% by mass or less, more preferably 8% by mass or less, and still more preferably 6.0% by mass or less.

<Liquid Crystal Compound>

The composition layer of the step 1 includes a liquid crystal compound having a polymerizable group (polymerizable liquid crystal compound).

The polymerizable liquid crystal compound may be a rod-like liquid crystal compound or a disk-like liquid crystal compound, but is preferably the rod-like liquid crystal compound.

Examples of the rod-like liquid crystal compound include rod-like nematic liquid crystal compounds. The rod-like nematic liquid crystal compounds are preferably azomethines, azoxys, cyanobiphenyls, cyanophenyl esters, benzoic acid esters, cyclohexanecarboxylic acid phenyl esters, cyanophenylcyclohexanes, cyano-substituted phenylpyrimidines, alkoxy-substituted phenylpyrimidines, phenyldioxanes, tolans, or alkenylcyclohexylbenzonitriles.

Not only a low-molecular-weight liquid crystal compound but also a high-molecular-weight liquid crystal compound can be used.

The polymerizable liquid crystal compound can be obtained by introducing a polymerizable group into the liquid

crystal compound.

A type of the polymerizable group included in the polymerizable liquid crystal compound is not particularly limited, but is preferably a functional group capable of addition polymerization, and more preferably a polymerizable ethylenically unsaturated group or a ring polymerizable group. Examples thereof include an unsaturated polymerizable group (for example, a (meth)acryloyl group, a vinyl group, a styryl group, and an allyl group), an epoxy group, and an aziridinyl group. The unsaturated polymerizable group is preferable, and the ethylenically unsaturated polymerizable group is more preferable. The polymerizable group can be introduced into a molecule of the liquid crystal compound by various methods.

The number of polymerizable groups contained in the polymerizable liquid crystal compound is preferably 1 to 6, and more preferably 1 to 3 per molecule.

Examples of the polymerizable liquid crystal compound include the compounds described in Makromol. Chem., vol. 190, pp. 2255 (1989), Advanced Material, vol. 5, pp. 107

(1993), US4683327A, US5622648A, US5770107A, WO95/022586A, WO95/024455A, WO97/00600A, WO98/23580A, WO98/52905A, JP1989-272551A (JP-H1-272551A), JP1994-016616A (JP-H6-016616A), JP1995-110469A (JP-H7-110469A), JP1999-080081A (JP-H11-080081A), JP2001-328973A, and the like.

In the composition, two or more kinds of the polymerizable liquid crystal compounds may be used in combination.

A content of the polymerizable liquid crystal compound in the composition layer is not particularly limited, but from the viewpoint that it is easy to control the alignment state of the liquid crystal compounds, the content is preferably 60% by mass or more, and more preferably 70% by mass or more with respect to the total mass of the composition layer. The upper limit is not particularly limited, but is preferably 99% by mass or less, more preferably 97% by mass or less, still more preferably 95% by mass or less, and particularly preferably 90% by mass or less.

<Other Components>

The composition layer may include other components, which are other than the first polymerizable chiral agent, the second polymerizable chiral agent, and the polymerizable liquid crystal compound.

For example, the composition layer may include a polymerization initiator. In a case where the composition layer includes a polymerization initiator, the polymerization of the liquid crystal compound having a polymerizable group proceeds more efficiently.

Examples of the polymerization initiator include known polymerization initiators, examples of which include a photopolymerization initiator and a thermal polymerization initiator. The photopolymerization initiator is preferable.

A content of the polymerization initiator in the composition layer is not particularly limited, but is preferably 0.01% to 20% by mass, and more preferably 0.5% to 10% by mass with respect to the total mass of the composition layer.

The composition layer may include a surfactant. Examples of the surfactant include compounds known in the related art, examples of which include a hydrocarbon-based surfactant, a fluorine-based surfactant, and a silicone-based surfactant. From the viewpoint of improving environmental suitability, it is preferable that the surfactant does not include a fluorine atom. As the surfactant, the hydrocarbon-based surfactant or the silicone-based surfactant is preferable. Examples of the fluorine-based surfactant include the compounds described in paragraphs 0028 to 0056 of JP2001-330725A and the compounds described in paragraphs 0069 to 0126 of JP2003-295212.

The surfactants may be used alone or in combination of two or more kinds thereof.

In a case where the composition layer includes a surfactant, the content of the surfactant is preferably 0.01% to 5.0% by mass, more preferably 0.01% to 3.0% by mass, and still more preferably 0.05% to 1.0% by mass with respect to the total mass of the composition layer.

The composition layer may include an additive (alignment control agent) that promotes horizontal alignment or vertical alignment in order to bring the liquid crystal compounds into a horizontal alignment state or a vertical alignment state.

Examples of the alignment control agent include the fluorine (meth)acrylate-based polymers described in paragraphs [0018] to [0043] of JP2007-272185A, the compounds represented by Formulae (I) to (IV) described in paragraphs [0031] to [0034] of JP2012-203237, and the compounds described in JP2013-113913.

Furthermore, the alignment control agent may be used alone or in combination of two or more kinds thereof.

A content of the alignment control agent in the composition layer is not particularly limited, but is preferably 0.01% to 10% by mass, more preferably 0.01% to 5% by mass, and particularly preferably 0.02% to 1% by mass with respect to the total mass of the liquid crystal compound.

The composition layer may include other components, which are other than the components described above. Examples of the other components include a polymerizable monomer, an adhesion improver, a crosslinking agent, a polymerization inhibitor, an antioxidant, an ultraviolet absorber, a light stabilizer, a colorant, and metal oxide fine particles.

<Substrate>

In a case of forming the composition layer, it is preferable to form the composition layer on a substrate.
The substrate is a plate that supports the composition layer.
The substrate is preferably a transparent substrate. Furthermore, the transparent substrate is intended to mean a substrate whose visible light transmittance is 60% or more, and the visible light transmittance is preferably 80% or more, and more preferably 90% or more.
A thickness direction retardation value (Rth(550)) of the substrate at a wavelength of 550 nm is not particularly limited, and is preferably -110 to 110 nm, and more preferably -80 to 80 nm.
An in-plane retardation value (Re(550)) of the substrate at a wavelength of 550 nm is not particularly limited, but is preferably 0 to 50 nm, more preferably 0 to 30 nm, and still more preferably 0 to 10 nm.
As a material for forming the substrate, a polymer which is excellent in optical performance transparency, mechanical strength, heat stability, moisture shielding property, isotropy, and the like is preferable.
Examples of the polymer film which can be used as the substrate include cellulose acylate films (for example, a cellulose triacetate film (refractive index: 1.48), a cellulose diacetate film, a cellulose acetate butyrate film, and a cellulose acetate propionate film), polyolefin films such as polyethylene and polypropylene, polyester films such as polyethylene terephthalate and polyethylene naphthalate, polyether sulfone films, polyacrylic films such as polymethyl methacrylate, polyurethane films, polycarbonate films, polysulfone films, polyether films, polymethylpentene films, polyether ketone films, (meth)acrylonitrile films, and a film of a polymer having an alicyclic structure (a norbornene-based resin (ARTON: trade name, manufactured by JSR Corporation), or an amorphous polyolefin (ZEONEX: trade name, manufactured by Zeon Corporation)).
Above all, as a material for the polymer film, triacetyl cellulose, polyethylene terephthalate, or a polymer having an alicyclic structure is preferable, and triacetyl cellulose is more preferable.
The substrate may include various additives (for example, an optical anisotropy adjuster, a wavelength dispersion adjuster, a fine particle, a plasticizer, an ultraviolet inhibitor, a deterioration inhibitor, and a release agent).
A thickness of the substrate is not particularly limited, but is preferably 10 to 200 μm, more preferably 10 to 100 μm, and still more preferably 20 to 90 μm. In addition, the substrate may consist of a plurality of layers laminated. The substrate may be subjected to a surface treatment (for example, a glow discharge treatment, a corona discharge treatment, an ultraviolet (UV) treatment, and a flame treatment) on the surface of the substrate in order to improve adhesion with layers provided thereon.
Moreover, an adhesive layer (undercoat layer) may be provided on the substrate.
In addition, in order to impart slipperiness in a transport step and prevent a back surface and a front surface from sticking to each other after winding, a polymer layer in which inorganic particles having an average particle diameter of about 10 to 100 nm are mixed at a solid content mass ratio of 5% to 40% by mass may be arranged on one side of the substrate.
The substrate may be a so-called temporary support. That is, the substrate may be peeled off from the cholesteric liquid crystal layer after the production method of the embodiment of the present invention is carried out.
In addition, the surface of the substrate may be directly subjected to a rubbing treatment. That is, a substrate which has been subjected to a rubbing treatment may be used. A direction of the rubbing treatment is not particularly limited, and an optimum direction is appropriately selected according to the direction in which the liquid crystal compounds are desired to be aligned.
A treatment method widely adopted as a liquid crystal alignment treatment step of a liquid crystal display (LCD) can be applied for the rubbing treatment. That is, a method for obtaining alignment by rubbing the surface of the substrate in a certain direction with paper, gauze, felt, rubber, nylon fibers, polyester fibers, or the like can be used.
An alignment film may be arranged on the substrate.
The alignment film can be formed by a method such as rubbing treatment of an organic compound (preferably a polymer), oblique vapor deposition of an inorganic compound, formation of a layer having microgrooves, or accumulation of an organic compound (for example, ω-tricosanoic acid, dioctadecylmethylammonium chloride, and methyl stearate) by the Langmuir-Blodgett method (LB film).
Furthermore, there is also known an alignment film capable of expressing an alignment function by application of an electric field, application of a magnetic field, or light irradiation (preferably with polarized light).
The alignment film is preferably formed by a rubbing treatment of a polymer.
Examples of the polymer included in the alignment film include a methacrylate-based copolymer, a styrene-based copolymer, a polyolefin, a polyvinyl alcohol and a modified polyvinyl alcohol, a poly(N-methylolacrylamide), a polyester, a polyimide, a vinyl acetate copolymer, a carboxymethyl cellulose, and the polycarbonate described in paragraph 0022 of JP1996-338913A (JP-H8-338913A). In addition, a silane coupling agent can also be used as the polymer.
Among those, a water-soluble polymer (for example, poly(N-methylolacrylamide), carboxymethyl cellulose,

gelatin, polyvinyl alcohol, and modified polyvinyl alcohol) is preferable, gelatin, polyvinyl alcohol, or modified polyvinyl alcohol is more preferable, and polyvinyl alcohol or modified polyvinyl alcohol is still more preferable.

As described above, the alignment film can be formed by applying a solution including the polymer which is an alignment film forming material and an optional additive (for example, a crosslinking agent) onto a substrate, followed by heat drying (crosslinking) and a rubbing treatment.

<Procedure of Step 1>

In the step 1, a composition layer including the above-mentioned components is formed, but the procedure is not particularly limited. Examples of the procedure include a method of applying a composition including the first polymerizable chiral agent, the second polymerizable chiral agent, and the polymerizable liquid crystal compound described above onto a substrate, followed by a drying treatment as necessary (hereinafter also simply referred to as an "application method"), and a method of separately forming a composition layer and transferring the formed layer onto a substrate. Above all, the application method is preferable from the viewpoint of productivity.

Hereinafter, the application method will be described in detail.

The composition used in the application method includes the first polymerizable chiral agent, the second polymerizable chiral agent, the polymerizable liquid crystal compound, and other components described above (for example, a polymerization initiator) as necessary.

The content of each component in the composition is preferably adjusted to be the content of each component in the above-described composition layer.

In a case of the application method, the composition may include a solvent.

The solvent is preferably a solvent capable of dissolving each component of the composition, and examples thereof include methyl ethyl ketone, cyclohexanone (anone), and a mixed solvent thereof.

In a case where the composition includes a solvent, the content of the solvent in the composition is preferably an amount at which the concentration of solid contents in the composition is 5% to 50% by mass, and more preferably an amount at which the concentration of solid contents in the composition is 10% to 40% by mass.

In the composition, the solvent may be used alone or in combination of two or more kinds thereof. In a case where two or more kinds of the solvents are used, the total content thereof is preferably within the range.

The application method is not particularly limited, and examples thereof include a wire bar application method, an extrusion application method, a direct gravure application method, a reverse gravure application method, and a die-application method.

Furthermore, a treatment for drying the coating film applied onto the substrate may be carried out as necessary after application of the composition. The solvent can be removed from the coating film by carrying out the drying treatment.

A thickness of the coating film is not particularly limited, but is preferably 0.1 to 20 μm, more preferably 0.2 to 15 μm, and still more preferably 0.5 to 10 μm.

[Step 2]

The step 2 is a step of aligning the liquid crystal compounds in the composition layer. By carrying out the present step, the liquid crystal compound in the composition layer is brought into an alignment state of a cholesteric liquid crystalline phase. That is, as shown in FIG. 1, by the step 2, a composition layer 12 in which the liquid crystal compounds LC are cholesterically aligned is formed on a substrate 10. Furthermore, FIG. 1 is a schematic cross-sectional view of the substrate 10 and the composition layer 12.

The step 2 is preferably a step of subjecting the composition layer to a heat treatment to align the liquid crystal compounds in the composition layer.

With regard to conditions for the heat treatment, the optimum conditions are selected according to the liquid crystal compound used.

Above all, the heating temperature is often 25°C to 250°C, more often 40°C to 150°C, and still more often 50°C to 130°C.

The heating time is often 0.1 to 60 minutes, and more often 0.2 to 5 minutes.

The alignment state of the liquid crystal compounds obtained by the step 2 changes depending on the helical twisting power and the concentration of the first polymerizable chiral agent and the second polymerizable chiral agent.

The absolute value of the weighted average helical twisting power of the chiral agent in the composition layer formed by the step 1 is preferably 10.0 $\mu m^{-1}$ or more, more preferably 15.0 $\mu m^{-1}$ or more, and still more preferably 20.0 $\mu m^{-1}$ or more. The upper limit is not particularly limited, but is often 250 $\mu m^{-1}$ or less, and is preferably 200 $\mu m^{-1}$ or less, and more preferably 100 $\mu m^{-1}$ or less.

Furthermore, in a case where the absolute value of the weighted average helical twisting power of the chiral agent in the composition layer is within the range, the liquid crystal compounds in the composition can be cholesterically aligned

by the step 2.

Here, the weighted average helical twisting power of the chiral agent is a total value obtained by dividing the product of the helical twisting power of each chiral agent contained in the composition layer and the concentration (% by mass) of each chiral agent in the composition layer by the total concentration (% by mass) of the chiral agents in the composition layer, in a case where two or more types of chiral agents are contained in the composition. For example, in a case where two chiral agents (chiral agent X and chiral agent Y) are used in combination, the weighted average helical twisting power is represented by Expression (B).

Weighted average helical twisting power ($\mu m^{-1}$) = (helical twisting power ($\mu m^{-1}$) of chiral agent X × Concentration (% by mass) of chiral agent X in composition layer + helical twisting power ($\mu m^{-1}$) of chiral agent Y × concentration (% by mass) of chiral agent Y in composition layer)/(Concentration (% by mass) of chiral agent X in composition layer + Concentration (% by mass) of chiral agent Y in composition layer) Expression (B)

It should be noted that in Expression (B), in a case where the helical direction of the chiral agent is right-handed, the helical twisting power has a positive value. In addition, in a case where the helical direction of the chiral agent is left-handed, the helical twisting power has a negative value. That is, for example, in a case of a chiral agent having a helical twisting power of 10 $\mu m^{-1}$, the helical twisting power is expressed as 10 $\mu m^{-1}$ in a case where the helical direction of the helix induced by the chiral agent is right-handed. On the other hand, in a case where the helical direction of the helix induced by the chiral agent is left-handed, the helical twisting power is expressed as -10 $\mu m^{-1}$.

[Step 3]

The step 3 is a step of irradiating the composition layer with light having a wavelength that enables the helical twisting power of the first polymerizable chiral agent to change, under a condition of an oxygen concentration of 1% by volume or more, after the step 2.

Hereinbelow, the mechanism of this step will be described with reference to the accompanying drawings.

As shown in FIG. 1, in the step 3, light irradiation is performed from the direction opposite to a composition layer 12 side of the substrate 10 (the direction of the white arrow in FIG. 1) under the condition that the oxygen concentration is 1% by volume or more. Furthermore, the light irradiation is carried out from the substrate 10 side in FIG. 1, the light irradiation may be performed from the composition layer 12 side.

At that time, in a case where a lower region 12A of the composition layer 12 on the substrate 10 side and an upper region 12B of the composition layer 12 opposite to the substrate 10 side are compared, the surface of the upper region 12B is on the air side, so that the oxygen concentration in the upper region 12B is high and the oxygen concentration in the lower region 12A is low. Therefore, in a case where the composition layer 12 is irradiated with light, the polymerization of the liquid crystal compound easily proceeds in the lower region 12A, and the alignment state of the liquid crystal compounds is immobilized. Furthermore, the first polymerizable chiral agent is also present in the lower region 12A and the first polymerizable chiral agent is also photosensitized, resulting in a change in helical twisting power. However, since the alignment state of the liquid crystal compounds is immobilized in the lower region 12A, there occurs no change in the alignment state of the liquid crystal compounds even in a case where a heating treatment accompanying the light irradiation in the step 3 described later, or the step 5 of subjecting the composition layer subjected to the light irradiation in the step 3 to a heating treatment.

In addition, since the oxygen concentration is high in the upper region 12B, the polymerization of the liquid crystal compound is inhibited by oxygen, and therefore the polymerization does not proceed easily even in a case where light irradiation is carried out. Furthermore, since the first polymerizable chiral agent is also present in the upper region 12B, the first polymerizable chiral agent is also photosensitive, resulting in a change in helical twisting power. Therefore, in a case where the heating treatment accompanying the light irradiation in the step 3 described later, or the step 5 of subjecting the composition layer subjected to the light irradiation in the step 3 to a heating treatment is carried out, the alignment state of the liquid crystal compounds changes along the changed helical twisting power.

That is, the immobilization of the alignment state of the liquid crystal compounds is likely to proceed in a region on the substrate side (lower region) of the composition layer by carrying out the light irradiation in the step 3. In addition, in the region (upper region) of the composition layer on the side opposite to the substrate side, the immobilization of the alignment state of the liquid crystal compounds is unlikely to proceed, and the helical twisting power changes according to the first polymerizable chiral agent that is photosensitized.

The light irradiation in the step 3 is carried out under a condition of an oxygen concentration of 1% by volume or more. Above all, from the viewpoint that a region in which the alignment state of the liquid crystal compounds is different is likely to be formed in the cholesteric liquid crystal layer, the oxygen concentration is preferably 2% by volume or more, and

more preferably 5% by volume or more. The upper limit is not particularly limited, and may be, for example, 100% by volume.

The time of the light irradiation in the step 3 is preferably 50 seconds or shorter, more preferably 30 seconds or shorter, and still more preferably 10 seconds or shorter. The lower limit is not particularly limited, and is preferably 0.1 seconds or longer and more preferably 0.2 seconds or longer from the viewpoint of curing the liquid crystal compound.

The irradiation amount of the light irradiation in the step 3 is preferably 300 $mJ/cm^2$ or less, more preferably 250 $mJ/cm^2$ or less, and still more preferably 200 $mJ/cm^2$ or less. The lower limit is not particularly limited, and is preferably 1 $mJ/cm^2$ or more, and more preferably 5 $mJ/cm^2$ or more from the viewpoint of curing the liquid crystal compound.

Furthermore, in a case where the step 5 is carried out after the light irradiation in the step 3, the light irradiation in the step 3 is preferably carried out at 15°C to 70°C (preferably 25°C to 50°C).

On the other hand, in a case where the heating treatment is also carried out in a case of the light irradiation in the step 3, the temperature for the heating treatment is preferably a temperature at which the non-immobilized liquid crystal compounds in the composition layer are aligned. More specifically, the temperature is often 40°C to 250°C, more often 50°C to 150°C, still more often more than 50°C and 150°C or less, and particularly often 60°C to 130°C. In addition, in a case where the heating treatment is also carried out in a case of the light irradiation in the step 3, the heating time is often 0.01 to 60 minutes, and more often 0.03 to 5 minutes.

The light used for the light irradiation may be light to which the first polymerizable chiral agent is photosensitive. That is, the light used for the light irradiation is not particularly limited as long as it is an actinic ray or radiation that changes the helical twisting power of the first polymerizable chiral agent, and examples thereof include an emission line spectrum of a mercury lamp, a far ultraviolet ray represented by an excimer laser, an extreme ultraviolet ray, an X-ray, an ultraviolet ray, and an electron beam. Among these, the ultraviolet rays are preferable.

In addition, the heating treatment may be carried out in a case of the light irradiation in the step 3. The heating treatment accompanying the light irradiation in the step 3 will be described together with the subsequent step 5.

[Step 5]

The step 5 is a step of subjecting the composition layer to a heating treatment between the step 3 and the step 4. Furthermore, in a case where the heating treatment is carried out in a case of the light irradiation in the step 3, the step 5 may not be carried out.

From the viewpoint of easily forming a predetermined cholesteric liquid crystal layer, it is preferable that the production method of the embodiment of the present invention has the step 5.

From the viewpoint that a predetermined cholesteric liquid crystal layer is likely to be formed, it is preferable that the step 5 is a step of carrying out a heating treatment at a temperature higher than that in a case of the light irradiation in the step 3.

By carrying out the step 5, the alignment state of the liquid crystal compounds changes in the region in which the helical twisting power of the first polymerizable chiral agent in the composition layer subjected to light irradiation in the step 3 has changed. More specifically, the step 5 is a step of subjecting the composition layer after the light irradiation in the step 3 to a heating treatment (preferably a heating treatment at a temperature higher than that in a case of the light irradiation in the step 3) to align the liquid crystal compounds in the composition layer not immobilized by the light irradiation in the step 3.

Hereinbelow, the mechanism of this step will be described with reference to the accompanying drawings.

As described above, in a case where the composition layer 12 shown in FIG. 1 is subjected to the light irradiation in the step 3, the alignment state of the liquid crystal compounds is immobilized in the lower region 12A, whereas the polymerization of the liquid crystal compound is unlikely to proceed and the alignment state of the liquid crystal compounds is not immobilized in the upper region 12B. In addition, in the upper region 12B, the weighted average helical twisting power of the first polymerizable chiral agent and the second polymerizable chiral agent changes due to the change in helical twisting power of the first polymerizable chiral agent. In a case where such a change in helical twisting power of the first polymerizable chiral agent occurs, a force that twists the liquid crystal compound changes in the upper region 12B, as compared with the state before the light irradiation in the step 3.

Hereinafter, the change in the weighted average helical twisting power before the light irradiation in the step 3 will be described in detail. Furthermore, in the following description, as an example, a case where the composition layer 12 includes a first polymerizable chiral agent that induces a left-handed helical direction and that undergoes a decrease in helical twisting power by light irradiation, and a second polymerizable chiral agent that induces a right-handed helical direction and that does not undergo a change in helical twisting power by light irradiation, and in which the absolute value of "the helical twisting power of the first polymerizable chiral agent ($\mu m^{-1}$) × the concentration of the first polymerizable chiral agent (% by mass)" is less than the absolute value of "the helical twisting power of the second polymerizable chiral agent ($\mu m^{-1}$) × the concentration of the second polymerizable chiral agent (% by mass)" will be described.

A schematic view of a graph in which a relationship between a helical twisting power ($\mu m^{-1}$) × a concentration (% by mass) and a light irradiation amount ($mJ/cm^2$) is plotted for each of the first polymerizable chiral agent and the second

polymerizable chiral agent is shown in FIG. 2. In addition, a schematic view of a graph in which a relationship between a weighted average helical twisting power ($\mu m^{-1}$) of the first polymerizable chiral agent and the second polymerizable chiral agent and a light irradiation amount ($mJ/cm^2$) is plotted is shown in FIG. 3.

In FIGS. 2 and 3, the vertical axis represents the "helical twisting power ($\mu m^{-1}$) of chiral agent × concentration (% by mass) of chiral agent", and the helical twisting power increases as a value thereof deviates from zero. First, a relationship between the first polymerizable chiral agent and the second polymerizable chiral agent in the composition layer of the step 2 (that is, the composition layer before the light irradiation in the step 3) corresponds to a point in time at which the light irradiation amount is 0.

As shown in FIGS. 2 and 3, at the point in time at which the light irradiation amount is 0, the weighted average helical twisting power is more than 0. Therefore, in the composition layer 12 in which the liquid crystal compounds LC formed in the step 2 are cholesterically aligned, the helical structure of the cholesteric liquid crystalline phase is a right-handed helical structure derived from the second polymerizable chiral agent.

In a case where light irradiation is performed in the upper region 12B in such a state and the helical twisting power of the first polymerizable chiral agent decreases depending on the light irradiation amount as shown in FIGS. 2 and 3, the weighted average helical twisting power of the chiral agent in the upper region 12B is large, and the right-handed helical twisting power is strong, as shown in FIG. 1. That is, the helical twisting power that induces the helix of the liquid crystal compound increases in the direction of the helix induced by the second polymerizable chiral agent (+) as the irradiation amount increases.

Therefore, in a case where the composition layer 12 after the light irradiation in the step 3 in which such a change in the weighted average helical twisting power occurred is subjected to the heating treatment in the step 5 to promote the realignment of the liquid crystal compound, the liquid crystal compounds LC are twist-aligned more strongly along a helical axis extending along the thickness direction of the composition layer 12 in the upper region 12B, as shown in FIG. 4. On the other hand, as described above, the polymerization of the liquid crystal compound proceeds to immobilize the alignment state of the liquid crystal compounds during the light irradiation in the step 3 in the lower region 12A of the composition layer 12, so that the realignment of the liquid crystal compounds does not proceed.

As described above, by carrying out the step 5, a plurality of regions having different helical pitches are formed along the thickness direction of the composition layer.

Furthermore, in FIGS. 2 to 4, an aspect in which a chiral agent that undergoes a decrease in helical twisting power by light irradiation is used as the first polymerizable chiral agent has been described, but the present invention is not limited to this aspect. For example, a chiral agent that undergoes an increase in helical twisting power by light irradiation may be used as the first polymerizable chiral agent. In this case, for example, as shown in FIG. 5, in the cholesteric liquid crystal layer, the weighted average helical twisting power decreases by the light irradiation in the step 3.

The heating treatment in the step 5 is preferably carried out at a temperature higher than that in a case of the light irradiation in the step 3.

The difference between the temperature of the heating treatment in the step 5 and the temperature at the time of the light irradiation in the step 3 is preferably 5°C or more, more preferably 10°C to 110°C, and still more preferably 20°C to 110°C.

The temperature of the heating treatment in the step 5 is preferably a temperature which is higher than the temperature during light irradiation in the step 3 and at which the non-immobilized liquid crystal compounds in the composition layer are aligned. More specifically, the temperature of the heat treatment is often 40°C to 250°C, more often 50°C to 150°C, still more often higher than 50°C and 150°C or lower, and particularly often 60°C to 130°C.

The heating time in step 5 is often 0.01 to 60 minutes, and more often 0.03 to 5 minutes.

In addition, an absolute value of the difference between the weighted average helical twisting power of the chiral agent in the composition layer after the light irradiation in the step 3 and the weighted average helical twisting power before the light irradiation in the step 3 is preferably 0.05 $\mu m^{-1}$ or more, more preferably 0.05 to 20.0 $\mu m^{-1}$, still more preferably 0.1 to 15.0 $\mu m^{-1}$, particularly preferably 1.0 to 15.0 $\mu m^{-1}$, and most preferably 5.0 to 15.0 $\mu m^{-1}$.

In addition, the heating treatment may be carried out in a case of carrying out the light irradiation in the step 3 instead of the step 5. The same effect as that in the step 5 can be obtained by carrying out the heating treatment in a case of the light irradiation in the step 3.

Furthermore, in a case where the heating treatment is carried out in a case of the light irradiation in the step 3, the heating treatment may be carried out from before the light irradiation or may be carried out during the light irradiation.

In a case where the heating treatment is carried out in a case of the light irradiation in the step 3, the heating temperature and the heating time are as described above.

[Step 4]

The step 4 is a step of subjecting the composition layer to a curing treatment to immobilize the alignment state of the liquid crystal compounds after the heating treatment accompanying the light irradiation in the step 3 or the heating

treatment in the step 5 (that is, after the realignment of the liquid crystal compounds) to form a cholesteric liquid crystal layer having a plurality of regions in which helical pitches are different along the thickness direction.

Furthermore, the length of the helical pitch in each region formed is often constant. That is, by carrying out the present step, it is possible to form a cholesteric liquid crystal layer that is formed by immobilizing the cholesteric liquid crystalline phase, in which the cholesteric liquid crystal layer has a plurality of regions in which the helical pitch of the cholesteric liquid crystalline phase is different along the thickness direction and the helical pitch in each region is constant.

A method for the curing treatment is not particularly limited, and examples thereof include photocuring treatment and thermosetting treatment. Above all, a light irradiation treatment is preferable, and an ultraviolet irradiation treatment is more preferable.

A light source such as an ultraviolet lamp is used for ultraviolet irradiation. In addition, a wavelength cut filter may be used in a case of the ultraviolet irradiation.

An irradiation amount of light (for example, ultraviolet rays) is not particularly limited, and is generally preferably approximately 100 to 800 $mJ/cm^2$.

An atmosphere at the time of the light irradiation is not particularly limited, and the light irradiation may be carried out under air or may be carried out under an inert atmosphere. In particular, the light irradiation is preferably carried out at an oxygen concentration of less than 1% by volume.

In a case where the photocuring treatment is carried out as the curing treatment in the step 4, temperature conditions during the photocuring are not particularly limited and may be any temperature at which the alignment state of the liquid crystal compounds after the heating treatment accompanying the light irradiation in the step 3 or the heating treatment in the step 5 is maintained.

A difference between the temperature of the heating treatment accompanying the light irradiation in the step 3 or the heating treatment in the step 5 and the temperature during the photocuring treatment in the step 4 is preferably within 100°C, and more preferably within 80°C.

Furthermore, it is preferable that the temperature of the heating treatment accompanying the light irradiation in the step 3 or the heating treatment in the step 5 and the temperature during the photocuring treatment in the step 4 are the same, or the temperature during the photocuring treatment in the step 4 is lower.

In the cholesteric liquid crystal layer obtained by carrying out the curing treatment, the alignment state of the liquid crystal compounds is immobilized.

Furthermore, in the present specification, the "immobilized" state is the most typical and preferable aspect of a state in which the alignment of the liquid crystal compounds is maintained. The "immobilized" state is not limited thereto, and is specifically more preferably a state in which in a temperature range of usually 0°C to 50°C or in a temperature range of - 30°C to 70°C under more stringent conditions, the layer has no fluidity and an immobilized alignment morphology can be maintained stably without causing a change in the alignment morphology due to an external field or an external force.

Furthermore, in the cholesteric liquid crystal layer, it is no longer necessary for the composition in the layer to finally exhibit liquid crystallinity.

A thickness of the cholesteric liquid crystal layer is not particularly limited, but is preferably 0.05 to 10 μm, more preferably 0.1 to 8.0 μm, and still more preferably 0.2 to 6.0 μm. Furthermore, the thickness of the cholesteric liquid crystal is particularly preferably 1.8 μm or less, and most preferably 1.2 μm or less.

In the cholesteric liquid crystal layer that is formed by the method and that is formed by immobilizing the cholesteric liquid crystalline phase, in which the layer has a plurality of regions in which helical pitches of the cholesteric liquid crystalline phase are different along the thickness direction, the selective reflection center wavelengths derived from the cholesteric liquid crystalline phase of each region are different. For example, the cholesteric liquid crystal layer may be a cholesteric liquid crystal layer having a region in which a cholesteric liquid crystalline phase that reflects blue light is immobilized and a region in which a cholesteric liquid crystalline phase that reflects green light is immobilized, along the thickness direction, or may be a cholesteric liquid crystal layer having a region in which a cholesteric liquid crystalline phase that reflects green light is immobilized and a region in which a cholesteric liquid crystalline phase that reflects red light is immobilized, along the thickness direction.

Furthermore, in the present specification, the selective reflection center wavelength refers to an average value of two wavelengths showing a half-value transmittance: $T_{1/2}$ (%) expressed by the following Expression, in a case where a minimum value of the transmittance in a target object (member) is defined as $T_{min}$ (%).

Expression for calculating half-value transmittance:

$$T_{1/2} = 100 - (100 - T_{min})/2$$

In addition, among the visible light, light in a wavelength range of 420 nm or longer and shorter than 500 nm is blue light (B light), light in a wavelength range of 500 nm or longer and shorter than 600 nm is green light (G light), and light in a wavelength range of 600 nm or longer and shorter than 700 nm is red light (R light).

In addition, in FIG. 4, the cholesteric liquid crystal layer having two regions having different helical pitches has been described, but the present invention is not limited to the aspect, and the cholesteric liquid crystal layer may have three or more regions having different helical pitches. Examples of the cholesteric liquid crystal layer as described above include a cholesteric liquid crystal layer having a region in which a cholesteric liquid crystalline phase that reflects blue light is immobilized, a region in which a cholesteric liquid crystalline phase that reflects green light is immobilized, and a region in which a cholesteric liquid crystalline phase that reflects red light is immobilized, along the thickness direction.

[Cholesteric Liquid Crystal Layer]

The cholesteric liquid crystal layer of an embodiment of the present invention is

a cholesteric liquid crystal layer obtained by immobilizing a cholesteric liquid crystalline phase,
in which the cholesteric liquid crystal layer has a plurality of regions in which helical pitches are different along the thickness direction, and
the cholesteric liquid crystal layer is a layer formed of a liquid crystal compound having a polymerizable group (polymerizable liquid crystal compound), a first polymerizable chiral agent that undergoes a change in helical twisting power by light irradiation (first polymerizable chiral agent), and a second polymerizable chiral agent having helicity in a direction opposite to a direction of the first polymerizable chiral agent (second polymerizable chiral agent).

In the cholesteric liquid crystal layer of the embodiment of the present invention that is formed by the method and that is formed by immobilizing the cholesteric liquid crystalline phase, in which the layer has a plurality of regions in which helical pitches of the cholesteric liquid crystalline phase are different along the thickness direction, the selective reflection center wavelengths derived from the cholesteric liquid crystalline phase of each region are different. For example, the cholesteric liquid crystal layer may be a cholesteric liquid crystal layer having a region in which a cholesteric liquid crystalline phase that reflects blue light is immobilized and a region in which a cholesteric liquid crystalline phase that reflects green light is immobilized, along the thickness direction, or may be a cholesteric liquid crystal layer having a region in which a cholesteric liquid crystalline phase that reflects green light is immobilized and a region in which a cholesteric liquid crystalline phase that reflects red light is immobilized, along the thickness direction.

A thickness of the cholesteric liquid crystal layer is not particularly limited, but is preferably 0.05 to 10 μm, more preferably 0.1 to 8.0 μm, and still more preferably 0.2 to 6.0 μm. Furthermore, the thickness of the cholesteric liquid crystal is particularly preferably 1.8 μm or less, and most preferably 1.2 μm or less.

As the composition, various components for forming the composition layer in the step 1 of the production method of the embodiment of the present invention described in the above section can be used.

A content of the first polymerizable chiral agent in the composition is not particularly limited, but is preferably 0.1% by mass or more, more preferably 0.5% by mass or more, and still more preferably 1.0% by mass or more with respect to the total solid content of the composition. The upper limit is not particularly limited, but is preferably 10% by mass or less, more preferably 5% by mass or less, and still more preferably 3.5% by mass or less.

A content of the second polymerizable chiral agent in the composition is not particularly limited, but is preferably 1.0% by mass or more, more preferably 2.0% by mass or more, and still more preferably 4.0% by mass or more with respect to the total solid content of the composition. The upper limit is not particularly limited, but is preferably 10% by mass or less, more preferably 8% by mass or less, and still more preferably 6.0% by mass or less.

A content of the polymerizable liquid crystal compound in the composition is not particularly limited, but is preferably 60% by mass or more, and more preferably 70% by mass or more with respect to the total solid content of the composition. The upper limit is not particularly limited, but is preferably 99% by mass or less, more preferably 97% by mass or less, still more preferably 95% by mass or less, and particularly preferably 90% by mass or less.

The total content of the first polymerizable chiral agent and the second polymerizable chiral agent in the composition can be appropriately set to an amount capable of imparting a desired selective reflection center wavelength. As a specific example of the total content of the first polymerizable chiral agent and the second polymerizable chiral agent in the composition, the total content is preferably more than 5.0% by mass, more preferably 5.5% by mass or more, and still more preferably 6.0% by mass or more with respect to the total mass of the liquid crystal compound. The upper limit is not particularly limited, but is preferably 25% by mass or less, more preferably 20% by mass or less, and still more preferably 15% by mass or less.

In addition, the content of the first polymerizable chiral agent may be appropriately set to an amount capable of imparting a desired selective reflection center wavelength, but is, for example, preferably 5% to 95% by mass, more preferably 10% to 90% by mass, and still more preferably 15% to 50% by mass with respect to the total content of the first polymerizable chiral agent and the second polymerizable chiral agent.

The composition may include components other than the polymerizable liquid crystal compound, the first polymerizable chiral agent, and the second polymerizable chiral agent.

Examples of the other components include a polymerization initiator, a surfactant, and an alignment control agent.

Specific examples of the polymerization initiator, the surfactant, and the alignment control agent include the same ones as the polymerization initiator, the surfactant, and the alignment control agent that can be included in the composition layer in the step 1 of the production method of the embodiment of the present invention described in the above section.

The content of the polymerization initiator in the composition is not particularly limited, but is preferably 0.01% to 20% by mass, and more preferably 0.5% to 10% by mass with respect to the total solid content of the composition.

The content of the alignment control agent in the composition is not particularly limited, but is preferably 0.01% to 10% by mass, more preferably 0.01% to 5% by mass, and particularly preferably 0.02% to 1% by mass with respect to the total mass of the liquid crystal compound.

The composition may include other components, which are other than the components described above. Examples of the other components include a polymerizable monomer, a crosslinking agent, a polymerization inhibitor, an antioxidant, an ultraviolet absorber, a light stabilizer, a colorant, and metal oxide fine particles.

The cholesteric liquid crystal layer can be formed by the production method of the embodiment of the present invention described in the above section.

[Reflective Film]

A reflective film of an embodiment of the present invention has a cholesteric liquid crystal layer. The cholesteric liquid crystal layer is as described above.

Hereinafter, an example of the embodiment of the reflective film of the present invention will be described with reference to the drawings.

Meanwhile, in a case where the reflective film is incorporated in a windshield glass and used as a combiner for a head-up display, image light to be projected is preferably p-polarized light, that is, linearly polarized light in order to prevent reflection on a surface of the windshield glass. Therefore, it is desirable that the reflective film reflects linearly polarized light. Thus, hereinafter, the embodiment of the reflective film that reflects linearly polarized light will be described in detail.

In addition, the reflective film may have a transparent support that supports the cholesteric liquid crystal layer.

[First Embodiment of Reflective Film]

FIG. 6 is a schematic view showing an example of the reflective film according to the embodiment of the present invention. A reflective film 20 shown in FIG. 6 includes a transparent support 22, a first retardation layer 24, a cholesteric liquid crystal layer 26, and a second retardation layer 28 in this order. Furthermore, in the reflective film 20, the transparent support 22 is an optional member and may not be provided.

<Transparent Support 22>

The total light transmittance of the transparent support 22 is preferably 80% or more, and more preferably 90% or more. The upper limit is not particularly limited, but may be less than 100%.

The in-plane retardation of the transparent support 22 is preferably 10 nm or less, and more preferably 5 nm or less. The absolute value of a thickness direction retardation Rth of the transparent support is preferably 40 nm or less, and more preferably 30 nm or less.

Since the in-plane retardation and the thickness direction retardation are small, the disturbance of polarized light due to the transparent support is reduced.

A material constituting the transparent support 22 is not particularly limited, but is preferably a resin, more preferably a cellulose acylate resin or an acrylic resin, still more preferably a cellulose acylate resin, and particularly preferably a triacetyl cellulose resin or a diacetyl cellulose resin.

A thickness of the transparent support 22 is not particularly limited, but is preferably 5.0 to 1,000 μm, more preferably 10 to 250 μm, and still more preferably 15 to 90 μm.

<First Retardation Layer 24>

In the first retardation layer 24, a phase difference (optical path difference) is provided for two orthogonal polarized light components, resulting in a change in state of the incident polarized light. Furthermore, as will be described later, suitable examples of the first retardation layer 24 include a layer (A-plate) in which liquid crystal compounds are uniaxially aligned and immobilized.

Examples of the first retardation layer 24 include a stretched polycarbonate film, a stretched norbornene-based polymer film, a transparent film containing aligned inorganic particles having birefringence, such as strontium carbonate, a

thin film in which oblique deposition of an inorganic dielectric is performed on a support, and a film in which the liquid crystal compound is uniaxially aligned (nematically aligned) to immobilize the alignment.

Among these, as the first retardation layer 24, a film in which liquid crystal compounds are uniaxially aligned to immobilize the alignment is preferable.

A thickness of the first retardation layer 24 is not particularly limited, but is preferably 0.2 to 300 μm, more preferably 0.5 to 150 μm, and still more preferably 1.0 to 80 μm.

In a case where the first retardation layer 24 is a layer in which the alignment of the liquid crystal compounds is immobilized, the thickness of the first retardation layer 24 is not particularly limited, but is preferably 0.2 to 10 μm, more preferably 0.5 to 5.0 μm, and still more preferably 0.7 to 2.0 μm.

<Cholesteric Liquid Crystal Layer 26>

The cholesteric liquid crystal layer 26 has a plurality of regions in which helical pitches of the cholesteric liquid crystalline phase are different along the thickness direction, and selective reflection center wavelengths derived from the cholesteric liquid crystalline phase of each region are different. As the cholesteric liquid crystal layer 26, the cholesteric liquid crystal layer obtained by the above-described production method of the embodiment of the present invention can be applied. As an example of each region, starting from the transparent support 22 side, the structure includes a region having a selective reflection center wavelength in a red (R) wavelength range, a region having a selective reflection center wavelength in a green (G) wavelength range, and a region having a selective reflection center wavelength in a blue (B) wavelength range.

The cholesteric liquid crystal layer 26 reflects light having a selective reflection center wavelength corresponding to the helical pitch, and transmits light in other wavelength ranges. In addition, the cholesteric liquid crystal layer 26 exhibits selectively reflecting properties with respect to levorotatory or dextrorotatory circular polarization at a specific wavelength.

The cholesteric liquid crystal layer 26 may be a cholesteric liquid crystal layer formed by the production method of the embodiment of the present invention described in the above section, or may be a cholesteric liquid crystal layer formed by laminating the cholesteric liquid crystal layer formed by the production method of the embodiment of the present invention described in the above section and another cholesteric liquid crystal layer. Specifically, the cholesteric liquid crystal layer 26 may also be formed by laminating the cholesteric liquid crystal layer that has a region having a selective reflection center wavelength in a red (R) wavelength range, a region having a selective reflection center wavelength in a green (G) wavelength range, and a region having a selective reflection center wavelength in a blue (B) wavelength range along the thickness direction on a surface of the cholesteric liquid crystal layer having a selective reflection center wavelength in a red (IR) wavelength range by the production method of the embodiment of the present invention described in the above section.

<Second Retardation Layer 28>

The second retardation layer 28 is a so-called polarization conversion layer. The polarization conversion layer is a layer that exhibits optical rotation and birefringence with respect to visible light, and converts a polarization state of incident light.

As the second retardation layer 28, a layer in which a helical alignment structure of the liquid crystal compounds is immobilized is preferable.

In particular, the second retardation layer 28 is preferably a layer with an immobilized helical alignment structure of the liquid crystal compounds, in which the number x of pitches of the helical alignment structure and a film thickness y (unit: μm) of the polarization conversion layer satisfy all of the following relational expressions (a) to (c).

$$0.1 \leq x \leq 1.0 \text{ ... Expression (a)}$$

$$0.5 \leq y \leq 3.0 \text{ ... Expression (b)}$$

$$3{,}000 \leq (1{,}560 \times y)/x \leq 50{,}000 \text{ ... Expression (c)}$$

Furthermore, one pitch of the helical structure of the liquid crystal compound is one turn of a helix of the liquid crystal compound. That is, the number of pitches in a state in which a director (a major axis direction in a case of a rod-like liquid crystal) of the helically aligned liquid crystal compounds is rotated by 360° is defined as 1.

In a case where the second retardation layer 28 has the helical structure of the liquid crystal compound, it exhibits optical rotation and birefringence with respect to visible light having a wavelength shorter than a reflection peak

wavelength in the infrared region. Therefore, the polarized light in the visible region can be controlled. By setting the number x of pitches of the helical alignment structure of the second retardation layer 28 and the film thickness y of the second retardation layer 28 within the ranges, it is possible to impart a function of optically compensating the second retardation layer 28 with respect to visible light or a function of converting the linearly polarized light (P-polarized light) incident on the reflective film 20 into circularly polarized light.

By setting the helical structure to satisfy Relational Expressions (a) to (c), the second retardation layer 28 exhibits optical rotation and birefringence with respect to visible light. In particular, by setting a pitch P of the helical structure of the second retardation layer 28 to have a length corresponding to a pitch P of the cholesteric liquid crystal layer in which the selective reflection center wavelength is within the long wavelength infrared region, it is possible to exhibit high optical rotation and birefringence with respect to visible light having a short wavelength.

In the helical structure of the second retardation layer 28, the number x of pitches is more preferably 0.1 to 0.8, and the film thickness y is more preferably 0.6 to 2.6 μm. In addition, "(1,560 × y)/x" is more preferably 5,000 to 13,000.

Such a second retardation layer 28 can be basically formed in the same manner as a known cholesteric liquid crystal layer.

<Function of Reflective Film 20>

In a case where light is incident on the reflective film 20 from the first retardation layer 24 or second retardation layer 28 side, the light is reflected by the cholesteric liquid crystal layer 26.

Furthermore, as an aspect in a case where the reflective film 20 of FIG. 6 is incorporated into the windshield glass, the second retardation layer 28 may be arranged on a second glass plate (not shown) side that serves as a vehicle interior side, and the first retardation layer 24 may be arranged on a first glass plate (not shown) side that serves as a vehicle exterior side.

In this case, the second retardation layer 28 has a function of converting the projected P-polarized light (linearly polarized light) into circularly polarized light reflected by the cholesteric liquid crystal layer of the cholesteric liquid crystal layer 26. Meanwhile, the first retardation layer 24 has an optical compensation function for light incident from the outside of the windshield glass. For example, S-polarized light incident from the outside of the windshield glass undergoes a change in polarization state while passing through the second retardation layer 28, resulting in a mixture with the P-polarized components. Since a polarized sunglass cuts off the S-polarized light, the P-polarized components transmit the polarized sunglass. Therefore, there is a problem that the function of the polarized sunglass to cut off the glare of the reflected light that is mainly composed of S-polarized light is impaired, which hinders driving. In contrast, a configuration having the first retardation layer 24 and a use of the first retardation layer 24 for optical compensation enable the suitability for polarized sunglass to be improved.

In addition, in another aspect in a case where the reflective film 20 of FIG. 6 is incorporated into the windshield glass, the second retardation layer 28 may be arranged on a first glass plate (not shown) side that serves as a vehicle exterior side, and the first retardation layer 24 may be arranged on a second glass plate (not shown) side that serves as a vehicle interior side.

In this case, the first retardation layer 24 has a function of converting the projected P-polarized light (linearly polarized light) into circularly polarized light reflected by the cholesteric liquid crystal layer of the cholesteric liquid crystal layer 26. Meanwhile, the second retardation layer 28 has an optical compensation function for light incident from the outside of the windshield glass, and optical compensation by the second retardation layer 28 enables an improvement of the suitability for the polarized sunglass.

Moreover, in a case where the reflective film 20 of FIG. 6 is incorporated into a windshield glass, it is preferable that the front surface retardation of the first retardation layer 24 at a wavelength of 550 nm is 50 to 160 nm in a case where the first retardation layer 24 is arranged on the first glass plate (not shown) side that is a vehicle exterior side, and used as an optical compensation layer.

In addition, in a case where a direction corresponding to an upper direction of a front surface of the second glass plate, in which the windshield glass having the reflective film 20 is mounted on a transport vehicle, is defined as 0°, the angle of a slow axis of the first retardation layer 24 is preferably 10° to 50° or -50° to -10°.

Moreover, in a case where the first retardation layer 24 is used for converting linearly polarized light into circularly polarized light, the first retardation layer 24 is preferably configured to provide λ/4 as the front surface phase difference, and may be configured to provide 3λ/4 as the front surface phase difference. In addition, the angle of the slow axis may be arranged to change incident linearly polarized light into circularly polarized light.

In a case of the aspect, the front surface phase difference of the first retardation layer 24 at a wavelength of 550 nm is preferably 100 to 450 nm, and more preferably 120 to 200 nm or 300 to 400 nm. In addition, in a case where the reflective film 20 is used in the head-up display system, it is preferable that the direction of the slow axis of the first retardation layer 24 is determined in accordance with an incidence direction of projection light for displaying the projection image and a helical sense of the cholesteric liquid crystal layer.

[Other Embodiments of Reflective Film]

The reflective film may be in a form in which an A-plate described as the first retardation layer 24 is provided on both sides of the cholesteric liquid crystal layer 26, or may be in a form in which the polarization conversion layer described as the second retardation layer 28 is provided on both sides of the cholesteric liquid crystal layer 26. That is, the reflective film may be in a form in which the A-plate is provided on both sides of the cholesteric liquid crystal layer, or may be in a form in which the polarization conversion layer is provided on both sides of the cholesteric liquid crystal layer.

In a case where such a reflective film is incorporated into a windshield glass, the first retardation layer 24 or the second retardation layer 28 (polarization conversion layer) arranged on the second glass plate (not shown) side that is a vehicle interior side may have a configuration having a function of converting the projected P-polarized light (linearly polarized light) into circularly polarized light that can be reflected by the cholesteric liquid crystal layer 26. On the other hand, the first retardation layer 24 or the second retardation layer 28 (polarization conversion layer) arranged on the first glass plate (not shown) side that serves as a vehicle exterior side may be configured to have an optical compensation function for light incident from the outside of the windshield glass.

In addition, in the reflective film 20, the aspect has been described, in which the cholesteric liquid crystal layer 26 having a plurality of regions in which helical pitches of the cholesteric liquid crystalline phase are different along the thickness direction has a region having a selective reflection center wavelength in a red (R) wavelength range, a region having a selective reflection center wavelength in a green (G) wavelength range, and a region having a selective reflection center wavelength in a blue (B) wavelength range, in order from the transparent support 22 side. However, the cholesteric liquid crystal layer 26 may have a region having a selective reflection center wavelength in a blue (B) wavelength range, a region having a selective reflection center wavelength in a green (G) wavelength range, and a region having a selective reflection center wavelength in a red (R) wavelength range, in order from the transparent support 22 side.

The average value of reflectivity of the reflective film at an incidence angle of 5° in a wavelength range of 400 to 800 nm is preferably 25% or less, more preferably 20% or less, and still more preferably 15% or less. Furthermore, the lower limit value is not particularly limited, but is, for example, 10% or more.

The average transmittance of the reflective film at a wavelength of 380 to 420 nm is preferably 40% or more, more preferably 45% or more, and still more preferably 50% or more. Furthermore, the upper limit is not particularly limited, but is, for example, 90% or less.

[Laminated Glass]

A laminated glass of an embodiment of the present invention has a first glass plate, the above-described reflective film, and a second glass plate in this order. The reflective film is as described above.

Hereinafter, an example of the embodiment of the laminated glass of the present invention will be described with reference to the drawings.

[First Embodiment of Laminated Glass]

FIG. 7 is a schematic view showing an example of the laminated glass of the embodiment of the present invention. A laminated glass 30 shown in FIG. 7 is provided with a first glass plate 32, an interlayer film 34, the reflective film 20, a heat seal layer 36, and a second glass plate 38 in this order.

Furthermore, in the laminated glass 30, the interlayer film 34 and the heat seal layer 36 are optional members and may not be included in the laminated glass 30. In addition, the laminated glass 30 may be provided with a pressure-sensitive adhesive layer (OCA layer) instead of the heat seal layer 36.

In FIG. 7, the reflective film 20 has the second retardation layer 28, the cholesteric liquid crystal layer 26, the first retardation layer 24, and the transparent support 22 in this order from the first glass plate 32 side.

In a case where the laminated glass 30 is used as a windshield glass in a transport vehicle, curved glass is often used as the first glass plate 32 and the second glass plate 38. In a case where the first glass plate 32 is positioned in the vehicle exterior side and the second glass plate 38 is positioned in the vehicle interior side, the concave side of the first glass plate 32 is arranged to face the second glass plate 38 and the convex side of the second glass plate 38 is arranged to face the first glass plate 32.

<First Glass Plate and Second Glass Plate>

As the glass plate such as the first glass plate 32 and the second glass plate 38, a glass plate generally used for the windshield glass can be used. For example, a glass plate having a visible light transmittance of 80% or less, for example, 73% and 76%, such as green glass having high heat shielding properties, may be used.

A thickness of the first glass plate 32 and the second glass plate 38 is not particularly limited, but is, for example,

about 0.5 to 5.0 mm, preferably 1.0 to 3.0 mm, and more preferably 2.0 to 2.3 mm. The materials or thicknesses of the first glass plate 32 and the second glass plate 38 may be the same as or different from each other.

<Interlayer Film>

The interlayer film 34 prevents the glass from being broken and scattering in a vehicle in the event of an accident, and bonds the reflective film 20 and the first glass plate 32 together in the example of FIG. 7.

Any known interlayer film can be used as the interlayer film 34 (interlayer film sheet). For example, a resin film including a resin selected from the group consisting of polyvinyl butyral (PVB), an ethylene-vinyl acetate copolymer, and a chlorine-containing resin can be used. The above-described resin is preferably a main component of the interlayer film. Furthermore, the main component refers to a component occupying 50% by mass or more of the interlayer film.

Among the resins, the polyvinyl butyral and the ethylene-vinyl acetate copolymer are preferable, and the polyvinyl butyral is more preferable. The resin is preferably a synthetic resin.

The polyvinyl butyral can be obtained by acetalization of polyvinyl alcohol with butyl aldehyde. The degree of acetalization of the above-described polyvinyl butyral is preferably 40% to 85%, and more preferably 60% to 75%.

A thickness of the interlayer film 34 is not particularly limited, and may be set to a thickness corresponding to a forming material or the like, as in the interlayer film of the known windshield glass.

<Heat Seal Layer>

The heat seal layer 36 is not particularly limited, and is, for example, a layer consisting of a coating-type adhesive. In the example shown in FIG. 7, the reflective film 20 is attached to the second glass plate 38 by the heat seal layer 36.

A type of the heat seal layer 36 is not particularly limited, and various known coating-type adhesives can be used as long as the heat seal layer 36 can secure the transparency required as the windshield glass, and can attach the reflective film 20 to the second glass plate 38 with the necessary adhesion strength. As the heat seal layer 36, the same one as the interlayer film 34 such as PVB may be used.

The heat seal layer 36 may be formed of an adhesive.

From the viewpoint of the curing-type, adhesives are classified into hot-melt adhesives, thermosetting adhesives, photocuring adhesives, reaction curing adhesives, and pressure-sensitive adhesives requiring no curing.

Furthermore, in the aspect of FIG. 7, the heat seal layer 36 is described, but the reflective film may be directly attached to the second glass plate 38.

<Pressure-Sensitive Adhesive Layer>

In a case where the laminated glass has a pressure-sensitive adhesive layer (OCA layer) instead of the heat seal layer 36, the pressure-sensitive adhesive layer may be formed of a highly transparent adhesive transfer tape (OCA tape). A commercially available product for an image display device, in particular, a commercially available product for a surface of an image display portion of an image display device may be used as the highly transparent adhesive transfer tape. Examples of commercially available products include pressure-sensitive adhesive sheets (such as PD-S1) manufactured by Panac Co., Ltd., and pressure-sensitive adhesive sheets of MHM series from Nichiei Kako Co., Ltd.

[Second Embodiment of Laminated Glass]

In FIG. 7, the laminated glass in an aspect in which the first glass plate 32, the interlayer film 34, the reflective film 20, the heat seal layer 36, and the second glass plate 38 are provided in this order has been described. However, the configuration of the laminated glass is not limited thereto, and for example, a laminated glass in an aspect provided with the first glass plate 32, the heat seal layer 36, the reflective film 20, the interlayer film 34, and the second glass plate 38 in this order may also be adopted. Furthermore, in the aspect, the reflective film 20 has the transparent support 22, the first retardation layer 24, the cholesteric liquid crystal layer 26, and the second retardation layer 28, arranged in this order from the first glass plate 32 side, for example.

[Third Embodiment of Laminated Glass]

FIG. 8 is a schematic view showing an example of the laminated glass of the embodiment of the present invention. A laminated glass 40 shown in FIG. 8 includes the first glass plate 32, the interlayer film 34, the second glass plate 38, the heat seal layer 36, and the reflective film 20 in this order.

Furthermore, in the laminated glass 40, the heat seal layer 36 is an optional member and may not be included in the laminated glass 40. In addition, the laminated glass 40 may include a pressure-sensitive adhesive layer (OCA layer)

instead of the heat seal layer 36.

In FIG. 8, the reflective film 20 has the second retardation layer 28, the cholesteric liquid crystal layer 26, the first retardation layer 24, and the transparent support 22 in this order from the first glass plate 32 side.

Furthermore, each member of the laminated glass 40 is the same as that of the laminated glass 30.

<Method for Producing Laminated Glass>

A method for producing the laminated glass of an embodiment of the present invention is not particularly limited, and the laminated glass can be produced in accordance with a known method for manufacturing a laminated glass.

For example, the laminated glass can be produced by a method of laminating each member, and repeatedly performing a heating treatment and a pressurizing treatment (a treatment using rubber rollers, or the like) several times, and finally performing a heating treatment under a pressurizing condition using an autoclave or the like.

[Head-Up Display System]

A head-up display system of an embodiment of the present invention has a windshield glass consisting of the above-described laminated glass and a projector that irradiates the windshield glass with projection light.

FIG. 9 shows an example of the head-up display system of the embodiment of the present invention.

A head-up display system 110 of the embodiment of the present invention shown in FIG. 9 is an in-vehicle head-up display system, and has a projector 112 for a head-up display system and a windshield glass 114.

The projector 112 for a head-up display system shown in FIG. 9 has an image forming unit 120, an intermediate image screen 122, a reflective member 124, and a concave mirror 126. In the following description, the projector 112 for a head-up display system is also simply referred to as a "projector".

In the head-up display system 110 shown in FIG. 9, the projection light projected by the projector 112 is transmitted through a transmission window 132 provided on a dashboard 130 and projected to the windshield glass 114 to be observed by an observer OB.

Furthermore, as in a typical head-up display system, in the example shown in FIG. 9, the observer OB observes the image projected onto the windshield glass 114 as a virtual image as seen through the windshield glass 114.

In FIG. 9, the projector 112 irradiates the windshield glass with P-polarized projection light and the windshield glass 114 reflects the P-polarized light.

The present invention is not limited to the aspect in FIG. 9, and may adopt an aspect in which the projector irradiates the windshield glass with S-polarized projection light and the windshield glass reflects the S-polarized light.

Hereinafter, each member of the head-up display system 110 will be described in detail.

[Projector]

In the projector 112, the image forming unit 120 has a light source 134, a polarizing plate 136, and an optical deflector 138.

The image forming unit 120 is a so-called optical beam scanner that forms an image by scanning with optical beams.

The image forming unit 120 emits optical beams modulated in accordance with a projection image from the light source 134, converts the optical beams into P-polarized light by the polarizing plate 136, and performs secondary scanning of the optical beams by the optical deflector 138.

The projector 112 performs secondary scanning of the optical beams modulated in accordance with the projection image by the optical deflector 138, forms a real image by the intermediate image screen 122, and reflects the real image to a predetermined optical path by the reflective member 124 and the concave mirror 126. As described above, the reflected light is transmitted through the transmission window 132 provided on the dashboard 130, and projected to the windshield glass 114 to be observed by the observer OB as a virtual image as seen through the windshield glass 114.

A type of the light source 134 is not particularly limited and various light sources used for image formation can be used.

Examples of the light source 134 include a light emitting diode (LED), a discharge tube, and a laser light source. Furthermore, the LED includes a light emitting diode and an organic light emitting diode (OLED).

The polarizing plate 136 converts the incident optical beams into P-polarized light (P linearly polarized light).

A type of the polarizing plate 136 is not particularly limited and various normal linear polarizing plates (linear polarizers) can be used.

Examples of the polarizing plate 136 include a polarizing plate in which thin films having different refractive index anisotropies are laminated. As a polarizing plate in which thin films having different refractive index anisotropies are

laminated, for example, the polarizing plate described in JP1997-506837A (JP-H9-506837A) can be used. Specifically, in a case of performing processing under conditions selected to achieve a refractive index relationship, a polarizing plate can be formed by using a wide variety of materials.

As the polarizing plate in which thin films having different refractive index anisotropies are laminated, a commercially available product may be used. Examples of the commercially available product include DBEF (manufactured by 3M Company) and Advanced Polarizing Film (APF).

In addition, as the polarizing plate 136, a general linear polarizing plate such as an absorption type polarizing plate including an iodine compound and a reflective type polarizing plate such as a wire grid can also be used.

Furthermore, in the aspect of FIG. 9, the polarizing plate 136 converts the incident optical beams into P-polarized light (P linearly polarized light), but the present invention is not limited to this aspect, and the polarizing plate may be a polarizing plate that converts the incident optical beams into S-polarized light (S linearly polarized light). In this case, the retardation layer may convert the S-polarized light into the P-polarized light. Furthermore, in a case where the polarizing plate converts light into S-polarized light, a light amount loss in each subsequent reflective member can be reduced.

As the optical deflector 138, various normal optical deflectors that can perform secondary scanning of the optical beams can be used.

An example of the optical deflector 138 may be a galvanometer mirror, a combination of a galvanometer mirror and a polygon mirror, micro electro mechanical systems (MEMS), or the like. Among these, the MEMS is suitably used.

In the projector 112, the image forming unit 120 forms the projection image and the image by scanning with the optical beams, but the present invention is not limited thereto.

That is, in the projector of the present invention, various types of normal image forming means used in the projector (imager) of the head-up display system can be used as the image forming unit.

As an example of the image forming unit, for example, a liquid crystal display (LCD) or liquid crystal on silicon (LCOS) using a fluorescent tube or a liquid crystal, or the like is adopted.

Alternatively, as another example of the image forming unit, for example, an organic electroluminescence (organic EL) display or the like is adopted.

Alternatively, as still another example of the image forming unit, digital light processing (DLP) using a digital micromirror device (DMD), or the like is adopted.

The projection light emitted from the image forming unit 120 then forms a real image (visible image) by the intermediate image screen 122.

A type of the intermediate image screen 122 is not particularly limited and a known intermediate image screen can be appropriately used.

As described above, the projection light that has formed a real image by the intermediate image screen 122 is reflected to a predetermined optical path by the reflective member 124 and the concave mirror 126.

Types of the reflective member 124 and the concave mirror 126 are not particularly limited, and known members can be appropriately used.

Furthermore, in the projector 112 shown in FIG. 9, the reflective member 124 and the concave mirror 126 are used as a member that changes the optical path of the projection light, but the present invention is not limited thereto.

That is, the projector of the present invention may not have a concave mirror and may have only a reflective member as the member that changes the optical path of the projection light, or may have one or more other optical reflection elements in addition to the reflective member and the concave mirror.

As the optical reflection element, a free-form surface mirror or the like can also be used in addition to the concave mirror and the normal mirror. That is, the projector of the present invention can be configured to use various optical reflection elements as long as it has the reflective member in the present invention.

Furthermore, as the member that changes the optical path of the projection light, a diffractive reflective element may be used in addition to the concave mirror described above. Examples of the diffractive reflective element include a holographic diffraction grating and a surface relief type diffraction grating.

[Windshield Glass]

The windshield glass 114 means common windows and windshields for transport vehicles such as cars and trains, airplanes, ships, motorcycles, and vehicles such as playground equipment. The windshield glass is preferably used as a front glass, a windshield glass, or the like in a forward vehicle in a traveling direction.

As the windshield glass 114, the laminated glass of the embodiment of the present invention is used.

In a case where the windshield glass consisting of the laminated glass of the embodiment of the present invention is used in a transport vehicle, the first glass plate 32 is arranged on the vehicle exterior side, and the second glass plate 38 is arranged on the vehicle interior side.

A visible light transmittance of the windshield glass 114 is not limited, but is preferably high. The visible light transmittance of the windshield glass 114 is preferably 70% or more, more preferably more than 70%, still more preferably

75% or more, and particularly preferably 80% or more.

The above-described visible light transmittance is preferably satisfied at any position of the windshield glass 114, and the above-described visible light transmittance is particularly preferably satisfied at a position where the reflective film is present.

[Use]

The head-up display system of the embodiment of the present invention can be applied to various applications.

Examples of the head-up display system include an in-vehicle head-up display system.

[Composition]

The composition of an embodiment of the present invention includes a liquid crystal compound having a polymerizable group, a first polymerizable chiral agent that undergoes a change in helical twisting power by light irradiation, and a second polymerizable chiral agent having helicity in a direction opposite to a direction of the first polymerizable chiral agent.

As the composition, various components for forming the composition layer in the step 1 of the production method of the embodiment of the present invention described in the above section can be used.

A content of the first polymerizable chiral agent in the composition is not particularly limited, but is preferably 0.1% by mass or more, more preferably 0.5% by mass or more, and still more preferably 1.0% by mass or more with respect to the total solid content of the composition. The upper limit is not particularly limited, but is preferably 10% by mass or less, more preferably 5% by mass or less, and still more preferably 3.5% by mass or less.

A content of the second polymerizable chiral agent in the composition is not particularly limited, but is preferably 1.0% by mass or more, more preferably 2.0% by mass or more, and still more preferably 4.0% by mass or more with respect to the total solid content of the composition. The upper limit is not particularly limited, but is preferably 10% by mass or less, more preferably 8% by mass or less, and still more preferably 6.0% by mass or less.

A content of the polymerizable liquid crystal compound in the composition is not particularly limited, but is preferably 60% by mass or more, and more preferably 70% by mass or more with respect to the total solid content of the composition. The upper limit is not particularly limited, but is preferably 99% by mass or less, more preferably 97% by mass or less, still more preferably 95% by mass or less, and particularly preferably 90% by mass or less.

The total content of the first polymerizable chiral agent and the second polymerizable chiral agent in the composition can be appropriately set to an amount capable of imparting a desired selective reflection center wavelength. As a specific example of the total content of the first polymerizable chiral agent and the second polymerizable chiral agent in the composition, the total content is preferably more than 5.0% by mass, more preferably 5.5% by mass or more, and still more preferably 6.0% by mass or more with respect to the total mass of the liquid crystal compound. The upper limit is not particularly limited, but is preferably 25% by mass or less, more preferably 20% by mass or less, and still more preferably 15% by mass or less.

In addition, the content of the first polymerizable chiral agent may be appropriately set to an amount capable of imparting a desired selective reflection center wavelength, but is, for example, preferably 5% to 95% by mass, more preferably 10% to 90% by mass, and still more preferably 15% to 50% by mass with respect to the total content of the first polymerizable chiral agent and the second polymerizable chiral agent.

The composition may include components other than the polymerizable liquid crystal compound, the first polymerizable chiral agent, and the second polymerizable chiral agent.

Examples of the other components include a polymerization initiator, a surfactant, and an alignment control agent.

Specific examples of the polymerization initiator, the surfactant, and the alignment control agent include the same ones as the polymerization initiator, the surfactant, and the alignment control agent that can be included in the composition layer in the step 1 of the production method of the embodiment of the present invention described in the above section.

The content of the polymerization initiator in the composition is not particularly limited, but is preferably 0.01% to 20% by mass, and more preferably 0.5% to 10% by mass with respect to the total solid content of the composition.

The content of the alignment control agent in the composition is not particularly limited, but is preferably 0.01% to 10% by mass, more preferably 0.01% to 5% by mass, and particularly preferably 0.02% to 1% by mass with respect to the total mass of the liquid crystal compound.

The composition may include other components, which are other than the components described above. Examples of the other components include a polymerizable monomer, a crosslinking agent, a polymerization inhibitor, an antioxidant, an ultraviolet absorber, a light stabilizer, a colorant, and metal oxide fine particles.

Examples

Hereinbelow, the present invention will be described in more detail with reference to Examples. The materials, the amounts of materials used, the proportions, the treatment details, the treatment procedure, and the like shown in Examples below may be appropriately modified as long as the modifications do not depart from the spirit of the present invention. Therefore, the scope of the present invention should not be restrictively interpreted by the following Examples.

[Manufacture of Sample]

Hereinafter, various coating liquids used for manufacturing a reflective film are shown.

[Composition a for Forming Liquid Crystal Layer]

The following components were mixed to prepare a composition a for forming a liquid crystal layer.

| Composition of composition a for forming liquid crystal layer | |
|---|---|
| · Liquid crystal compound LC1 below | 100.0 parts by mass |
| · Photopolymerization initiator (OXE01, manufactured by BASF) | 3.0 parts by mass |
| · Compound A (adhesion improver) below | 1.2 parts by mass |
| · Compound B (alignment control agent) below | 0.1 parts by mass |
| · Chiral agent C1 shown in Table 1 | Amount (formulation amount A below) adjusted to achieve target alignment state and selective reflection wavelength |
| · Chiral agent C2 shown in Table 1 | Amount (formulation amount A below) adjusted to achieve target alignment state and selective reflection wavelength |
| · Mixed solvent (methyl ethyl ketone (MEK)/Anone (mass ratio of 70/30)) | Amount at which concentration of solid contents is 20% by mass |

<Formulation Amount of Chiral Agent C1 and Chiral Agent C2 (Formulation Amount A)>

In the composition a for forming a liquid crystal layer, the formulation ratio and the total formulation amount of the chiral agent C1 and the chiral agent C2 were set to a formulation ratio and a total formulation amount such that the composition a for forming a liquid crystal layer satisfied the following conditions.

(Furthermore, the chiral agents C1 and C2 included in the composition a for forming a liquid crystal layer vary depending on each Example, and the helical twisting power exhibited by each chiral agent also varies depending on a type of the chiral agent. Therefore, in a case where an alignment state of the cholesteric liquid crystal alignment is formed using the composition a for forming a liquid crystal layer according to a predetermined procedure shown in the following conditions, such that the lower layer exhibits horizontal alignment and the upper layer has a selective reflection wavelength of 901 nm, the formulation ratio and the total formulation amount of the chiral agent C1 and the chiral agent C2 required to form the desired alignment state vary depending on each Example).

(Conditions)

In a case where a coating film of the composition a for forming a liquid crystal layer having a film thickness of 1.3 μm is formed, and then the retardation layer (lower layer) and the selective reflective layer 1 (upper layer) are formed according to the same procedure as procedure of (Manufacture of Liquid Crystal Layer A) which will be described later, the lower layer is horizontally aligned and the upper layer has a selective reflection wavelength of 901 nm.

Hereinafter, each component used is shown.

- Liquid Crystal Compound LC1 -

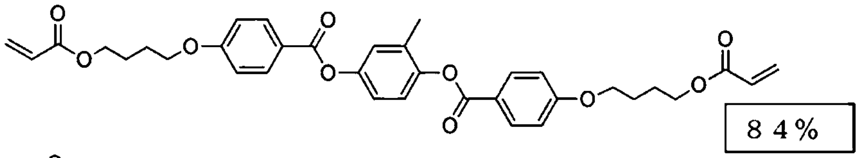

84%

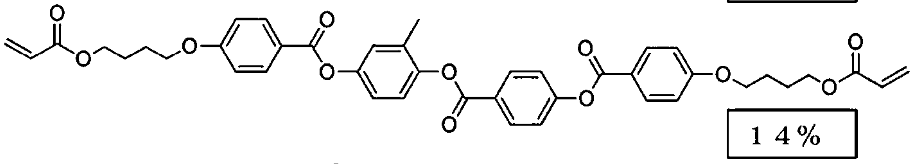

14%

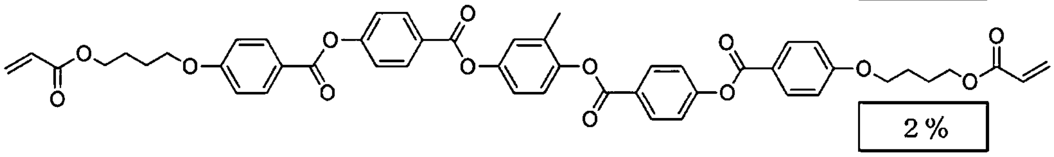

2%

The numerical values are in % by mass.

- Compound A -

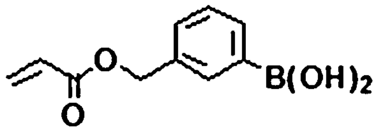

- Compound B -

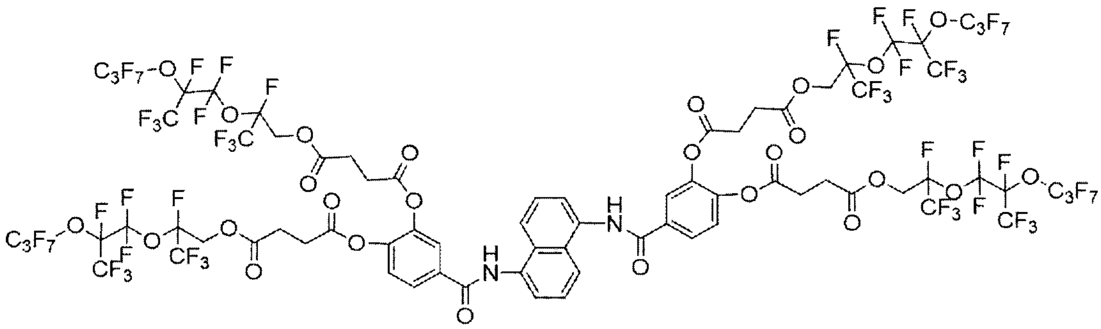

[Composition b for Forming Liquid Crystal Layer]

The following components were mixed to prepare a composition b for forming a liquid crystal layer.

| Composition of composition b for forming liquid crystal layer | |
|---|---|
| · Liquid crystal compound LC1 | 100.0 parts by mass |
| · Photopolymerization initiator (OXE01, manufactured by BASF) | 4.0 parts by mass |
| · Compound B (alignment control agent) | 0.03 parts by mass |
| · Chiral agent C1 shown in Table 1 | Amount (formulation amount B below) adjusted to achieve target alignment state and selective reflection wavelength |
| · Chiral agent C2 shown in Table 1 | Amount (formulation amount B below) adjusted to achieve target alignment state and selective reflection wavelength |
| · Mixed solvent (MEK/Anone (mass ratio of 70/30)) | Amount at which concentration of solid contents is 25% by mass |

<Formulation Amount of Chiral Agent C1 and Chiral Agent C2 (Formulation Amount B)>

In the composition b for forming a liquid crystal layer, the formulation ratio and the total formulation amount of the chiral agent C1 and the chiral agent C2 were set to a formulation ratio and a total formulation amount such that the composition b for forming a liquid crystal layer satisfied the following conditions.

(Furthermore, the chiral agents C1 and C2 included in the composition b for forming a liquid crystal layer vary depending on each Example, and the helical twisting power exhibited by each chiral agent also varies depending on a type of the chiral agent. Therefore, in a case where the lower layer has a selective reflection wavelength of 715 nm and the upper layer has a selective reflection wavelength of 560 nm in an alignment state of the cholesteric liquid crystal alignment formed by using the composition b for forming a liquid crystal layer according to a predetermined procedure shown in the following conditions, the formulation ratio and the total formulation amount of the chiral agent C1 and the chiral agent C2 required to form the desired alignment state vary depending on each Example).

(Conditions)

In a case where a coating film of the composition b for forming a liquid crystal layer having a film thickness of 1.0 μm is formed, and then the selective reflective layer 2 (lower layer) and the selective reflective layer 3 (upper layer) are formed according to the same procedure as procedure of (Manufacture of Liquid Crystal Layer B) which will be described later, the lower layer has a selective reflection wavelength of 715 nm and the upper layer has a selective reflection wavelength of 560 nm.

[Composition t1 for Forming Second Retardation Layer (A)]

The following components were mixed to prepare a composition t1 for forming a second retardation layer (A).

| Composition of composition t1 for forming second retardation layer (A) | |
|---|---|
| · Liquid crystal compound LC1 | 100.0 parts by mass |
| · Photopolymerization initiator (OXE01, manufactured by BASF) | 1.0 part by mass |
| · Compound C (alignment control agent) below | 0.25 parts by mass |
| · Mixed solvent (MEK/Anone (mass ratio of 85/15)) | Amount at which concentration of solid contents is 30% by mass |

- Compound C -

The numerical value of each repeating unit in the compound C is based on % by mole.

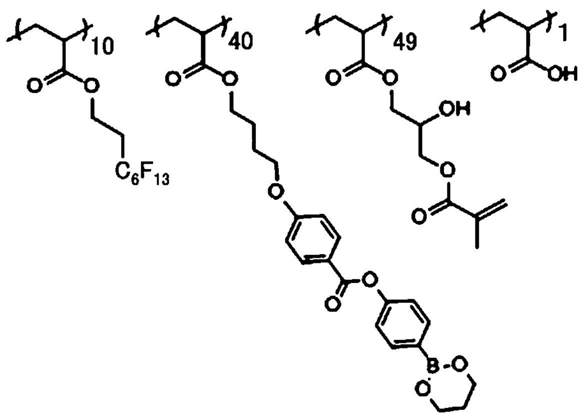

[Composition t2 for Forming Second Retardation Layer (B) (Polarization Conversion Layer)]

The following components were mixed to prepare a composition t2 for forming a second retardation layer (B).

| Composition of composition t2 for forming second retardation layer (B) | |
|---|---|
| · Liquid crystal compound LC1 | 100.0 parts by mass |
| · Photopolymerization initiator (OXE01, manufactured by BASF) | 1.0 part by mass |
| · Compound C (alignment control agent) | 0.25 parts by mass |
| · Chiral agent C2 shown in Table 1 | Amount (formulation amount T below) adjusted to achieve target alignment state and selective reflection wavelength |
| · Mixed solvent (MEK/Anone (mass ratio of 85/15)) | Amount at which concentration of solid contents is 30% by mass |

<Formulation Amount of Chiral Agent C2 (Formulation Amount T)>

In the composition t2 for forming a second retardation layer (B), the formulation amount of the chiral agent C2 was set to a formulation amount such that the composition t2 for forming a second retardation layer (B) satisfied the following conditions.

(Conditions)

In a case where a coating film of the composition t2 for forming a second retardation layer (B) having a film thickness of 1.6 μm was formed, and then in an environment of 50°C and an oxygen concentration of 100 ppm by volume or less, the coating film was exposed by a metal halide lamp that cut a wavelength of 330 nm or less to an integrated light amount of 300 mJ/cm$^2$ to immobilize the liquid crystal phase, the selective reflection wavelength was 8,500 nm.

[Composition h for Forming Heat Seal Layer]

The following components were mixed to prepare a composition h for forming a heat seal layer.

| Composition of composition h for forming heat seal layer | |
|---|---|
| · Photopolymerization initiator (Omnirad 127, manufactured by IGM Resins B. V.) | 2.0 parts by mass |
| · Particle dispersion liquid (AC-1011F3) (manufactured by Dainichiseika Color & Chemicals Mfg. Co., Ltd.) | 50.0 parts by mass |
| · Binder (CLARITY LA4285, manufactured by Kuraray Co., Ltd.) | 95.5 parts by mass |
| · Mixed solvent (MEK/butyl acetate (prepared to have a mass ratio of 50/50 including butyl acetate used in the dispersion liquid)) | Amount at which concentration of solid contents is 10% by mass |

Hereinafter, the chiral agent C1 and the chiral agent C2 shown in Table 1 are shown below. Furthermore, the compounds 1B to 4B and the compound R2 correspond to chiral agents that undergo a change in helical twisting power by light irradiation (ultraviolet light (365 nm) which will be described later).

- Compound 1A -

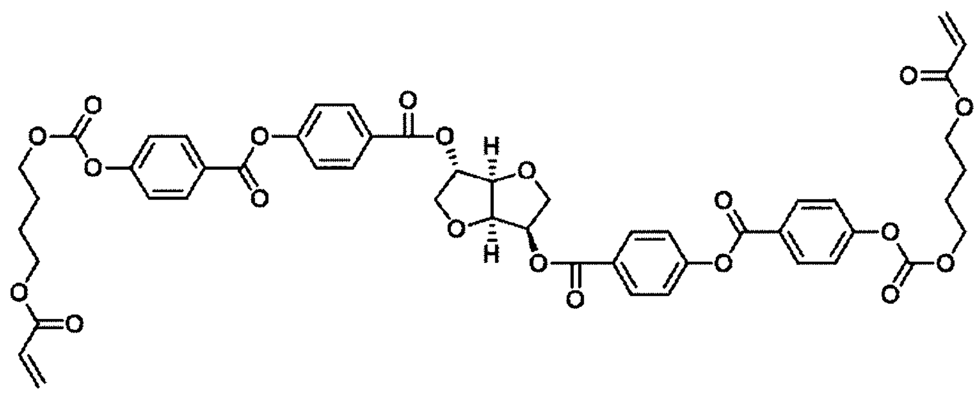

- Compound 1B -

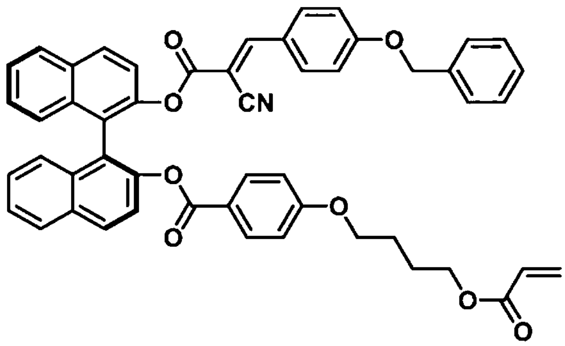

- Compound 2B -

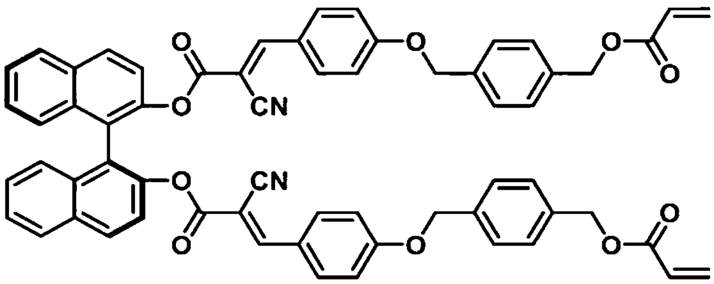

- Compound 3B -

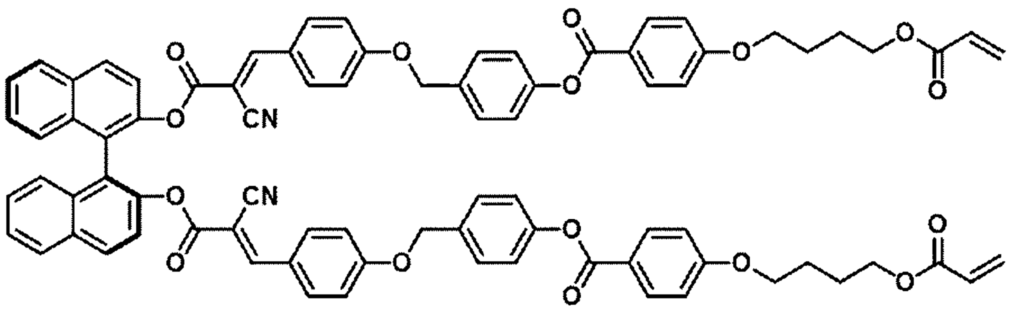

- Compound 4B -

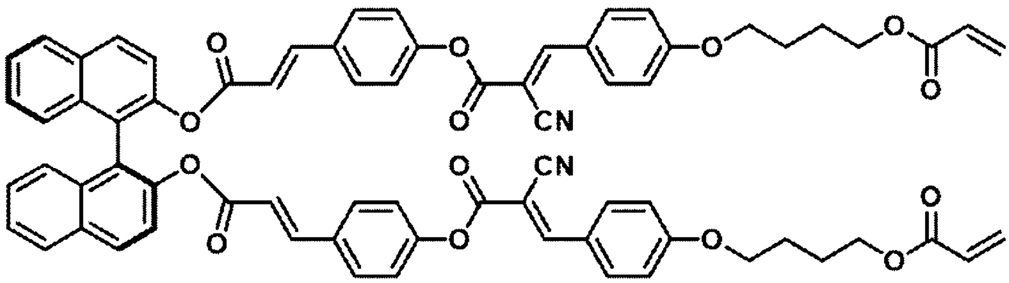

- Compound R1 -

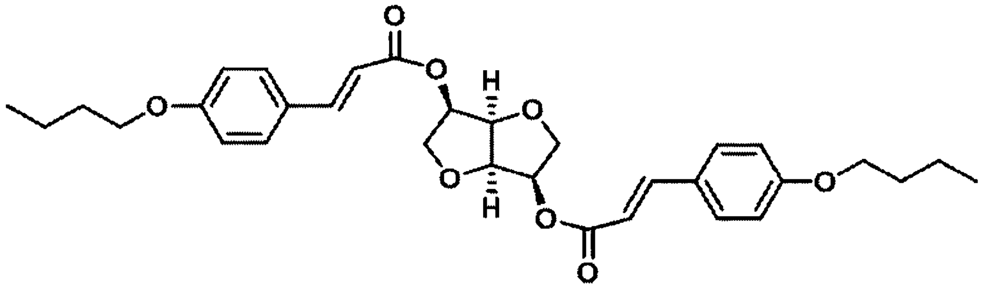

- Compound R2 -

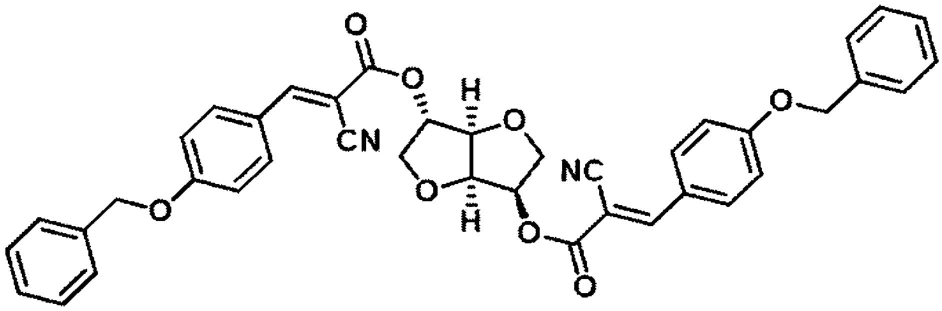

[Manufacture and Evaluation of Reflective Film]

Hereinafter, a method for manufacturing a reflective film and evaluation thereof will be described.

Furthermore, in the manufacturing procedure for the reflective film of each Example, the procedure for manufacturing the liquid crystal layer B using the composition b for forming a liquid crystal layer corresponds to the production method of the embodiment of the present invention described in the above section.

(Examples 1 to 3 and Comparative Example 1)

(Manufacture of Liquid Crystal Layer A)

A composition a for forming a liquid crystal layer was applied onto a triacetyl cellulose (TAC) film, on which an alignment had been formed, such that the film thickness after drying was 1.3 μm. After the application, the coating film was allowed to stand at room temperature for 15 seconds and heated at 60°C for 30 seconds. Thereafter, the coating film was irradiated with ultraviolet light (wavelength: 365 nm) at 60 $mJ/cm^2$ and heated at 60°C for 30 seconds again in an environment of 40°C in the air. Thereafter, in an environment of 50°C and an oxygen concentration of 100 ppm by volume or less, the coating film was exposed by a metal halide lamp that cut a wavelength of 330 nm or less to an integrated light amount of 300 $mJ/cm^2$ to immobilize the cholesteric liquid crystal phase, thereby forming a liquid crystal layer A having a retardation layer (first retardation layer) and a selective reflective layer 1 on the TAC film. That is, using the composition a for forming a liquid crystal layer, the retardation layer (first retardation layer) and the selective reflective layer 1 were collectively formed on the TAC film.

(Manufacture of Liquid Crystal Layer B)

Next, the composition b for forming a liquid crystal layer was applied onto the liquid crystal layer A such that the film thickness after drying was 1.0 μm. After the application, the coating film was allowed to stand at room temperature for 15 seconds and heated at 60°C for 30 seconds. Thereafter, the coating film was irradiated with ultraviolet light (wavelength: 365 nm) at 60 $mJ/cm^2$ and heated at 60°C for 30 seconds again in an environment of 40°C in the air. Thereafter, in an environment of 50°C and an oxygen concentration of 100 ppm by volume or less, the coating film was exposed by a metal halide lamp that cut a wavelength of 330 nm or less to an integrated light amount of 300 $mJ/cm^2$ to immobilize the cholesteric liquid crystal phase, thereby forming a liquid crystal layer B having a selective reflective layer 2 and a selective reflective layer 3 on the liquid crystal layer A. That is, using the composition b for forming a liquid crystal layer, the selective reflective layer 2 and the selective reflective layer 3 were collectively formed on the liquid crystal layer A. That is, a

cholesteric liquid crystal layer having a plurality of regions in which helical pitches are different along the thickness direction was formed.

(Manufacture of Second Retardation Layer (A))

Next, the composition t1 for forming a second retardation layer (A) was applied onto the liquid crystal layer B such that the film thickness after drying was 1.6 μm. After the application, in an environment of 50°C and an oxygen concentration of 100 ppm by volume or less, the coating film was exposed by a metal halide lamp that cut a wavelength of 330 nm or less to an integrated light amount of 300 mJ/cm$^2$ to immobilize the liquid crystal phase, thereby forming a second retardation layer (A) on the liquid crystal layer B.
Using the reflective film (hereinafter also referred to as a "reflective film T") manufactured by the procedure, various evaluations which will be described later were carried out.

[Examples 4 to 6 and Comparative Examples 2 and 3]

(Example 4)

The liquid crystal layer B was manufactured by the same manufacturing method as in Example 1, except that the types of the chiral compound C1 and the chiral agent C2 were changed. Next, the composition t1 for forming a second retardation layer (A) was applied onto the obtained liquid crystal layer B such that the film thickness after drying was 1.6 μm. After the application, the coating film was exposed by a metal halide lamp that cut a wavelength of 330 nm or less to an integrated light amount of 300 mJ/cm$^2$ in an environment of 50°C and an oxygen concentration of 100 ppm by volume or less, thus immobilizing the liquid crystal phase, thereby forming a second retardation layer (A) on the liquid crystal layer B (reflective film T). Subsequently, the composition h for forming a heat seal layer was further applied onto a surface of the second retardation layer (A) such that the film thickness after drying was 0.7 μm. After the application, the coating film was covered and sealed at normal temperature to be in a solvent atmosphere, and allowed to stand for 15 seconds. Thereafter, the coating film was heated at 120°C for 60 seconds, and in a room environment with an oxygen concentration of 100 ppm by volume or less, the coating film was exposed by a metal halide lamp (without using a wavelength cut filter) to an integrated light amount of 300 mJ/cm$^2$ to immobilize the liquid crystal phase, thereby obtaining a reflective film with a heat seal layer (hereinafter also referred to as a "reflective film H with a heat seal layer").

(Examples 5 and 6, and Comparative Examples 2 and 3)

The composition t1 for forming a second retardation layer (A) or the composition t2 for forming a second retardation layer (B) was applied onto the liquid crystal layer B obtained by each manufacturing method of Example 3 or Comparative Example 1 such that the film thickness after drying was 1.6 μm. After the application, the coating film was exposed by a metal halide lamp that cut a wavelength of 330 nm or less to an integrated light amount of 300 mJ/cm$^2$ in an environment of 50°C and an oxygen concentration of 100 ppm by volume or less to immobilize the liquid crystal phase, thereby forming a second retardation layer (A) or a second retardation layer (B) (polarization conversion layer) on the liquid crystal layer B (reflective film T). Subsequently, the composition h for forming a heat seal layer was further applied onto a surface of the second retardation layer (A) or the second retardation layer (B) such that the film thickness after drying was 0.7 μm. After the application, the coating film was covered and sealed at normal temperature to be in a solvent atmosphere, and allowed to stand for 15 seconds. Thereafter, the coating film was heated at 120°C for 60 seconds, and in a room environment with an oxygen concentration of 100 ppm by volume or less, the coating film was exposed by a metal halide lamp (without using a wavelength cut filter) to an integrated light amount of 300 mJ/cm$^2$ to immobilize the liquid crystal phase, thereby obtaining a reflective film H with a heat seal layer.
Using the reflective film H with a heat seal layer manufactured by the procedure, various evaluations described later were carried out.

[Various Evaluations]

<Spectrum Measurement of Film Alone>

(Measurement of Reflection Spectrum)

Using a spectrophotometer (manufactured by JASCO Corporation, V-670), for the reflective film T obtained by the manufacturing methods of Examples 1 to 6, P-polarized light and S-polarized light were incident from a direction of 5° with respect to the normal direction of the film from the second retardation layer side (second retardation layer (A) or

second retardation layer (B) side), and the reflectivity at 350 to 900 nm was measured. In addition, the obtained spectra of the P-polarized light and the S-polarized light were averaged to obtain a reflection spectrum.

In all of the reflective films T obtained by the manufacturing methods of Examples 1 to 6, the average reflectivity in a wavelength range of 400 to 800 nm was 15% or less.

(Measurement of Transmission Spectrum)

Moreover, using a spectrophotometer, for the reflective film T obtained by the manufacturing methods of Examples 1 to 6, P-polarized light and S-polarized light were incident from the normal direction (front surface 0°) of the film from the second retardation layer side (the second retardation layer (A) or second retardation layer (B) side), and the transmittance at 350 to 900 nm was measured. In addition, the obtained spectra of the P-polarized light and the S-polarized light were averaged to obtain a transmission spectrum.

In all of the reflective films T obtained by the manufacturing methods of Examples 1 to 6, the average transmittance in a wavelength range of 380 to 420 nm was 50% or more.

<Durability Evaluation 1 (Heat Treatment for 85 Minutes in Environment of 140°C)>

(Examples 1 to 3 and Comparative Example 1)

The second retardation layer (A) side of the reflective film T of Examples 1 to 3 and Comparative Example was bonded to a 2 mm-thick glass with a 10 μm-thick pressure-sensitive adhesive. In addition, the support side (TAC film side) was sandwiched and immobilized with the same 2 mm-thick glass, and subjected to a heat treatment (heat treatment) for 85 minutes in an environment of 140°C.

The reflection spectrum of the reflective film T bonded to the glass before heating and the reflective film T (a sample in a state where the 2 mm-thick glass for immobilization was removed after heating) bonded to the glass after heating was measured by carrying out the following procedure.

(Measurement of Reflection Spectrum)

Using a spectrophotometer (manufactured by JASCO Corporation, V-670), P-polarized light and S-polarized light were incident from a direction of 5° with respect to the normal direction of the glass from the glass side, and the reflectivity at 350 to 900 nm was measured. In addition, the obtained spectra of the P-polarized light and the S-polarized light were averaged to obtain a reflection spectrum.

(Measurement of Wavelength Shift Amount Δ of Reflection Spectrum before and after Heating)

The positions of a wavelength of 700 nm, a wavelength of 550 nm, and a wavelength of 450 nm in the reflection spectrum of the reflective film T before heating (incidentally, the reflection spectrum of the reflective film T, the positions of the wavelength of 700 nm/wavelength of 550 nm/wavelength of 450 nm typically correspond to a peak part, a trough part, and a foot part, respectively) were each set as an observation point ($A_{700}$, $A_{550}$, $A_{450}$).

The reflection spectrum of the reflective film T before heating and the reflection spectrum of the reflective film T after heating were compared with each other to determine wavelengths each corresponding to the observation points ($A_{700}$, $A_{550}$, $A_{450}$) in the reflection spectrum of the reflective film T after heating (a wavelength after heating at the observation point $A_{700}$: X (nm), a wavelength after heating at the observation point $A_{550}$: Y (nm), a wavelength after heating at the observation point $A_{450}$: Z (nm)).

For example, in a case where the observation point $A_{700}$ is taken as an example, and the observation point at the wavelength of 700 nm in the reflection spectrum of the reflective film T before heating is a peak position and the peak position in the reflection spectrum of the reflective film T after heating is observed at a position of a wavelength of 690 nm, the wavelength corresponding to the observation point $A_{700}$ after heating is 690 nm. Furthermore, although the case of the peak position has been described above, for example, in a case where the position of the wavelength of 700 nm in the reflection spectrum of the reflective film T before heating corresponds to an intermediate position from the peak part to the trough part of the reflection spectrum, the wavelength at which the intermediate position is located in the reflection spectrum of the reflective film T after heating corresponds to the relevant wavelength.

Next, wavelength shift amounts $S_{700}$, $S_{550}$, and $S_{450}$ at each observation point before and after heating were determined by Expression (1) to (3). Next, an arithmetic average value (see Expression (4)) of $S_{700}$, $S_{550}$, and $S_{450}$ was determined, and the value was taken as a wavelength shift amount Δ (nm) of the reflection spectrum before and after heating.

Expression (S1)

$$S_{700} = |(\text{Wavelength X nm (after heating)}) - (\text{Wavelength 700 nm (before heating)})|$$

Expression (S2)

$$S_{550} = |(\text{Wavelength Y nm (after heating)}) - (\text{Wavelength 550 nm (before heating)})|$$

Expression (S3)

$$S_{450} = |(\text{Wavelength Z nm (after heating)}) - (\text{Wavelength 450 nm (before heating)})|$$

Expression (S4) $\Delta = (S_{700} + S_{550} + S_{450})/3$

Based on the results of the wavelength shift amount $\Delta$ (nm) of the reflection spectrum before and after heating, the evaluation was carried out based on the following evaluation standard. The results are shown in Table 1.

(Evaluation Standard)

"A": $\Delta \leq 10$ nm

"B": 10 nm < $\Delta \leq 15$ nm

"C" : 15 nm < $\Delta$

<Durability Evaluation 2 (Heat treatment for 24 Hours in Environment of 90°C/80%RH)>

(Examples 1 to 3 and Comparative Example 1)

The second retardation layer (A) side of the reflective film T of Examples 1 to 3 and Comparative Example was bonded to a 2 mm-thick glass with a 10 μm-thick pressure-sensitive adhesive, and a heat treatment for 24 hours was carried out in an environment of 90°C/80%RH.

Measurement of the reflection spectrum was carried out on the reflective film T before and after heating by the same method as in the durability evaluation 1. Furthermore, the wavelength shift amount $\Delta$ (nm) of the reflection spectrum before and after heating was determined based on the reflective film T before and after heating by the same method as in the durability evaluation 1, and the evaluation was carried out. The results are shown in Table 1.

<Durability Evaluation 3 (Heated vacuum drawing (140°C, 2 hours) → Heated pressurization (140°C, 1.2 MPa, 45 minutes))>

(Examples 4 to 6, and Comparative Examples 2 and 3)

The reflective film H with a heat seal layer manufactured in Examples 4 to 6, and Comparative Examples 2 and 3 and other members were laminated to have the following arrangement. Furthermore, the reflective film H with a heat seal layer was laminated such that the heat seal layer side faced the first glass side.

First glass/Reflective film H with heat seal layer/Interlayer film/PET film for peeling/Second glass

Next, the laminate was subjected to a heat treatment 1 (vacuum drawing at 140°C for 2 hours) to bring it into a temporary pressurized state. Thereafter, the temporarily pressurized laminate was subjected to a heat treatment 2 (under a high temperature and a high pressure of 140°C and 1.2 MPa for 45 minutes).

Measurement of the reflection spectrum was carried out on the reflective film H with a heat seal layer before the temporary pressurization (heat treatment 1) and after the heated pressurization (heat treatment 2) by the same method as in the durability evaluation 1. Incidentally, in a case of measuring the reflection spectrum of the reflective film H with a heat

seal layer after the heated pressurization, the interlayer film/the PET film for peeling/the second glass was removed from the sample after the heated pressurization to carry out the measurement.

Furthermore, the wavelength shift amount Δ (nm) of the reflection spectrum before the temporary pressurization (heat treatment 1) and after the heated pressurization (heat treatment 2) was determined based on the reflective film H with a heat seal layer before the temporary pressurization (heat treatment 1) and after the heated pressurization (heat treatment 2) by the same method as in the durability evaluation 1.

Next, based on the results of the wavelength shift amount Δ (nm) of the reflection spectrum before and after heating, the evaluation was carried out based on the following evaluation standard. The results are shown in Table 1.

(Evaluation Standard)

"A": $\Delta \leq 5$ nm

"B": 5 nm < $\Delta \leq 10$ nm

"C": 10 nm < Δ

<Durability Evaluation 4 (Heat treatment for 24 Hours in Environment of 90°C/80%RH)>

(Examples 4 to 6, and Comparative Examples 2 and 3)

A heat treatment (heating treatment) for 24 hours was carried out on the reflective film H with a heat seal layer after the durability evaluation 3 was carried out, in an environment of 90°C/80%RH.

Measurement of the reflection spectrum was carried out on the reflective film H with a heat seal layer before and after heating by the same method as in the durability evaluation 1. Furthermore, the wavelength shift amount Δ (nm) of the reflection spectrum before and after heating was determined based on the reflective film H with a heat seal layer before and after heating by the same method as in the durability evaluation 3, and the evaluation was carried out. The results are shown in Table 1.

Table 1 is shown below.

Furthermore, the film thickness of the selective reflective layer 1 was calculated from fitting analysis of the reflection spectrum of the liquid crystal layer A, and the film thickness of the selective reflective layer 2 and the film thickness of the selective reflective layer 3 were calculated from fitting analysis of the transmission spectrum of the liquid crystal layer B.

Moreover, in the composition b for forming a liquid crystal layer of Example 1, the content of the chiral compound C1 and the content of the chiral compound C2 were 3.1% by mass and 4.8% by mass, respectively, with respect to the total solid content of the composition, the weighted average helical twisting power before the light irradiation in the step 3 was 28.6 $\mu m^{-1}$, and the weighted average helical twisting power after the light irradiation in the step 3 was 36.6 $\mu m^{-1}$.

In addition, in the composition b for forming a liquid crystal layer of Example 2, the content of the chiral compound C1 and the content of the chiral compound C2 were 2.1% by mass and 4.7% by mass, respectively, with respect to the total solid content of the composition, the weighted average helical twisting power before the light irradiation in the step 3 was 33.5 $\mu m^{-1}$, and the weighted average helical twisting power after the light irradiation in the step 3 was 42.8 $\mu m^{-1}$.

Moreover, in the composition b for forming a liquid crystal layer of Example 3, the content of the chiral compound C1 and the content of the chiral compound C2 were 1.9% by mass and 4.8% by mass, respectively, with respect to the total solid content of the composition, the weighted average helical twisting power before the light irradiation in the step 3 was 34.2 $\mu m^{-1}$, and the weighted average helical twisting power after the light irradiation in the step 3 was 43.6 $\mu m^{-1}$.

Moreover, in the composition b for forming a liquid crystal layer of Example 4, the content of the chiral compound C1 and the content of the chiral compound C2 were 1.6% by mass and 5.5% by mass, respectively, with respect to the total solid content of the composition, the weighted average helical twisting power before the light irradiation in the step 3 was 31.9 $\mu m^{-1}$, and the weighted average helical twisting power after the light irradiation in the step 3 was 40.7 $\mu m^{-1}$.

Moreover, in the compositions b for forming a liquid crystal layer of Examples 5 and 6, the content of the chiral compound C1 and the content of the chiral compound C2 were 1.9% by mass and 4.8% by mass, respectively, with respect to the total solid content of the composition, the weighted average helical twisting power before the light irradiation in the step 3 was 34.2 $\mu m^{-1}$, and the weighted average helical twisting power after the light irradiation in the step 3 was 43.6 $\mu m^{-1}$.

In addition, the column "Curing rate of selective reflective layer" in Table 1 indicates the curing rate of the liquid crystal layer B.

The curing rate was measured by an attenuated total reflection (ATR) method. Specifically, the measurement

was carried out by the following procedure. In a case of manufacturing the reflective film T and the reflective film H with a heat seal layer, a film formed up to the liquid crystal layer B was used as a sample film, the sample film was installed in the ATR measuring device such that the liquid crystal layer B side was pressed against a prism of a measuring part, light was incident (penetration depth of light into the sample film: about 1 μm), and the reflected light reflected by the sample film was measured.

[Table 1]

| | Evaluation form | Configuration of film | | | | | | | | | | Durability evaluation | | | |
|---|---|---|---|---|---|---|---|---|---|---|---|---|---|---|---|
| | | Chiral Compound C1 (Photosensitive chiral agent) | | Chiral Compound C2 (Non-photosensitive chiral agent) | | Film thickness (μm) of selective reflective layer (cholesteric liquid crystal layer) | | | Curing rate of selective reflective layer | Layer between selective reflective layer and adhesive layer | Adhesive layer with glass | Evaluation 1 | Evaluation 2 | Evaluation 3 | Evaluation 4 |
| | | Type | Optical rotation | Type | Optical rotation | Selective reflective layer 1 (IR) | Selective reflective layer 2 (R) | Selective reflective layer 3 (B, G) | | | | | | | |
| Example 1 | Reflective film T | Compound IB | Left | Compound 1A | Right | 0.47 | 0.81 | 0.26 | 78% | Second retardation layer (A) | Pressure-sensitive adhesive | B | A | - | - |
| Example 2 | Reflective film T | Compound 2B | Left | Compound 1A | Right | 0.48 | 0.88 | 0.23 | 71% | Second retardation layer (A) | Pressure-sensitive adhesive | A | A | - | - |
| Example 3 | Reflective film T | Compound 3B | Left | Compound 1A | Right | 0.46 | 0.89 | 0.24 | 81% | Second retardation layer (A) | Pressure-sensitive adhesive | A | A | - | - |
| Example 4 | Reflective film H | Compound 4B | Left | Compound 1A | Right | 0.47 | 0.88 | 0.24 | 79% | Second retardation layer (A) | Heat seal layer | - | - | A | A |
| Example 5 | Reflective film H | Compound 3B | Left | Compound 1A | Right | 0.46 | 0.89 | 0.24 | 81% | Second retardation layer (A) | Heat seal layer | - | - | A | A |
| Example 6 | Reflective film H | Compound 3B | Left | Compound 1A | Right | 0.46 | 0.89 | 0.24 | 81% | Second retardation layer (B) (Polarization conversion layer) | Heat seal layer | - | - | A | A |
| Comparative Example 1 | Reflective film T | Compound R2 | Right | Compound R1 | Left | 0.65 | 0.77 | 0.30 | 80% | Second retardation layer (A) | Pressure-sensitive adhesive | C | C | - | - |
| Comparative Example 2 | Reflective film H | Compound R2 | Right | Compound R1 | Left | 0.65 | 0.77 | 0.30 | 80% | Second retardation layer (A) | Heat seal layer | - | - | C | C |

(continued)

| | Evaluation form | Configuration of film | | | | | | | | | | Durability evaluation | | | |
|---|---|---|---|---|---|---|---|---|---|---|---|---|---|---|---|
| | | Chiral Compound C1 (Photosensitive chiral agent) | | Chiral Compound C2 (Non-photosensitive chiral agent) | | Film thickness (μm) of selective reflective layer (cholesteric liquid crystal layer) | | | Curing rate of selective reflective layer | Layer between selective reflective layer and adhesive layer | Adhesive layer with glass | Evaluation 1 | Evaluation 2 | Evaluation 3 | Evaluation 4 |
| | | Type | Optical rotation | Type | Optical rotation | Selective reflective layer 1 (IR) | Selective reflective layer 2 (R) | Selective reflective layer 3 (B, G) | | | | | | | |
| Comparative Example 3 | Reflective film H | Compound R2 | Right | Compound R1 | Left | 0.65 | 0.77 | 0.30 | 80% | Second retardation layer (B) (Polarization conversion layer) | Heat seal layer | - | - | C | C |

From the results of Table 1, it is clear that the reflective film of Examples, including the cholesteric liquid crystal layer obtained by the production method of the embodiment of the present invention, has a reduced change in reflection spectrum.

In addition, from the comparison of each Example, it was confirmed that in a case where the first polymerizable chiral agent and the second polymerizable chiral agent each have two or more polymerizable groups, the change in reflection spectrum was further reduced.

[Manufacture of Windshield Glass]

Using the reflective film H with a heat seal layer manufactured in Examples 4 to 6, windshield glasses were manufactured by the following procedure, and it was confirmed that all of the windshield glasses functioned as a head-up display.

[Manufacture 1 of Windshield Glass]

A glass plate having a width of 330 mm, and a thickness of 2 mm was prepared as the first glass plate and the second glass plate, a glass plate having a length of 260 mm, and a PVB film (manufactured by Sekisui Chemical Co., Ltd.) having a thickness of 0.76 mm was prepared as the interlayer film.

Next, the reflective film H with a heat seal layer, the first glass plate, the second glass plate, and the interlayer film were laminated by two arrangement methods of an arrangement method (1) and an arrangement method (2) shown below. It should be noted that in the arrangement method (1), the heat seal layer side of the reflective film H with a heat seal layer was arranged to face the first glass plate, and in the arrangement method (2), the heat seal layer side of the reflective film H with a heat seal layer was arranged to face the second glass plate.

Arrangement method (1):

First glass plate (vehicle exterior side)/reflective film H with heat seal layer/interlayer film/second glass plate (vehicle interior side)

Arrangement method (2):

First glass plate (vehicle exterior side)/interlayer film/reflective film H with heat seal layer/second glass plate (vehicle interior side)
Next, the two obtained laminates were held at 140°C and 10 kPa for 2 hours, and then heated at 135°C and 1.3 MPa for 45 minutes in an autoclave (manufactured by Kurihara Seisakusho Co., Ltd.) to remove air bubbles, thereby obtaining two windshield glasses.

[Manufacture 2 of Windshield Glass]

As the first glass plate, the second glass plate, and the third glass plate, a glass plate having a length of 260 mm, a width of 330 mm, and a thickness of 2 mm was prepared. In addition, a PVB film (manufactured by Sekisui Chemical Co., Ltd.) having a thickness of 0.76 mm was prepared as a mold for immobilizing the interlayer film and the support (TAC film) side of the heat seal layer of the reflective film H with a heat seal layer.

Next, the reflective film H with a heat seal layer, the first glass plate, the second glass plate, the third glass plate, the interlayer film, the PVB for immobilizing, and the third glass plate were laminated based on an arrangement method (3) shown below. It should be noted that in the arrangement method (3), the heat seal layer side of the reflective film H with a heat seal layer was arranged to face the second glass plate.

Arrangement method (3):

First glass plate (vehicle exterior side)/interlayer film/second glass plate (vehicle interior side)/reflective film H with heat seal layer/PVB for immobilizing/third glass plate
Next, the obtained laminate was held at 140°C and 10 kPa for 2 hours, and then heated at 135°C and 1.3 MPa for 45 minutes in an autoclave (manufactured by Kurihara Seisakusho Co., Ltd.) to remove air bubbles. Subsequently, the PVB for immobilizing and the third glass plate were peeled off from the support (TAC film) surface of the reflective film H with a heat seal layer to obtain a windshield glass in a form in which the reflective film H with a heat seal layer was bonded to the outside of the laminated glass consisting of the first glass plate and the second glass plate.

Explanation of References

10: substrate
LC: liquid crystal compound
12: composition layer
12B: upper region
12A: lower region
22: transparent support
24: first retardation layer
26: cholesteric liquid crystal layer
28: second retardation layer
20: reflective film
30, 40: laminated glass
32: first glass plate
34: interlayer film
36: heat seal layer
38: second glass plate
110: head-up display system
112: projector
114: windshield glass
120: image forming unit
122: intermediate image screen
124: reflective member
126: concave mirror
130: dashboard
132: transmission window
134: light source
136: polarizing plate
138: optical deflector
OB: observer

## Claims

**1.** A method for producing a cholesteric liquid crystal layer, the method comprising:

a step 1 of forming a composition layer including liquid crystal compounds having a polymerizable group, a first polymerizable chiral agent that undergoes a change in helical twisting power by light irradiation, and a second polymerizable chiral agent having helicity in a direction opposite to a direction of the first polymerizable chiral agent;
a step 2 of aligning the liquid crystal compounds in the composition layer;
a step 3 of irradiating the composition layer with light having a wavelength that enables the helical twisting power of the first polymerizable chiral agent to change, under a condition of an oxygen concentration of 1% by volume or more; and
a step 4 of subjecting the composition layer to a curing treatment to immobilize an alignment state of the liquid crystal compounds and to form a cholesteric liquid crystal layer having a plurality of regions in which helical pitches are different along a thickness direction,
wherein the method includes a step 5 of subjecting the composition layer to a heating treatment between the step 3 and the step 4, or includes subjecting the composition layer to a heating treatment during the light irradiation in the step 3.

**2.** The method for producing a cholesteric liquid crystal layer according to claim 1,
wherein the first polymerizable chiral agent and the second polymerizable chiral agent each have two or more polymerizable groups.

**3.** The method for producing a cholesteric liquid crystal layer according to claim 1 or 2,

wherein the first polymerizable chiral agent and the second polymerizable chiral agent include a partial structure selected from the group consisting of an isosorbide partial structure, an isomannide partial structure, and a binaphthyl partial structure.

**4.** The method for producing a cholesteric liquid crystal layer according to claim 1 or 2,
wherein the first polymerizable chiral agent has a photoisomerizable double bond in a molecule.

**5.** The method for producing a cholesteric liquid crystal layer according to claim 4,
wherein the first polymerizable chiral agent includes a photoisomerization moiety selected from the group consisting of a cinnamoyl moiety, a chalcone moiety, and a stilbene moiety.

**6.** The method for producing a cholesteric liquid crystal layer according to claim 1 or 2,
wherein a thickness of the cholesteric liquid crystal layer is 10 μm or less.

**7.** A cholesteric liquid crystal layer formed by immobilizing a cholesteric liquid crystalline phase, the cholesteric liquid crystal layer comprising:

a plurality of regions in which helical pitches are different along a thickness direction,
wherein the cholesteric liquid crystal layer is a layer formed of a composition including liquid crystal compounds having a polymerizable group, a first polymerizable chiral agent that undergoes a change in helical twisting power by light irradiation, and a second polymerizable chiral agent having helicity in a direction opposite to a direction of the first polymerizable chiral agent.

**8.** A reflective film comprising:
the cholesteric liquid crystal layer according to claim 7.

**9.** A reflective film comprising, in the following order:

a first retardation layer;
the cholesteric liquid crystal layer according to claim 7; and
a second retardation layer.

**10.** The reflective film according to claim 9,
wherein an average value of reflectivity at an incidence angle of 5° in a wavelength range of 400 to 800 nm is 15% or less.

**11.** The reflective film according to claim 9,
wherein an average transmittance in a wavelength range of 380 to 420 nm is 50% or more.

**12.** A laminated glass comprising, in the following order:

a first glass plate;
the reflective film according to claim 8; and
a second glass plate.

**13.** The laminated glass according to claim 12,
wherein a heat seal layer or a pressure-sensitive adhesive layer is provided between the first glass plate and the reflective film or between the second glass plate and the reflective film.

**14.** A laminated glass comprising, in the following order:

a first glass plate;
an interlayer film;
a second glass plate; and
the reflective film according to claim 8.

**15.** The laminated glass according to claim 14,
wherein a heat seal layer or a pressure-sensitive adhesive layer is provided between the second glass plate and the

reflective film.

**16.** A head-up display system comprising:

a windshield glass consisting of the laminated glass according to any one of claims 12 to 15; and
a projector that irradiates the windshield glass with projection light.

**17.** The head-up display system according to claim 16,
wherein the projector irradiates the windshield glass with P-polarized projection light.

**18.** A composition comprising:

liquid crystal compounds having a polymerizable group;
a first polymerizable chiral agent that undergoes a change in helical twisting power by light irradiation; and
a second polymerizable chiral agent having helicity in a direction opposite to a direction of the first polymerizable chiral agent.

FIG. 1

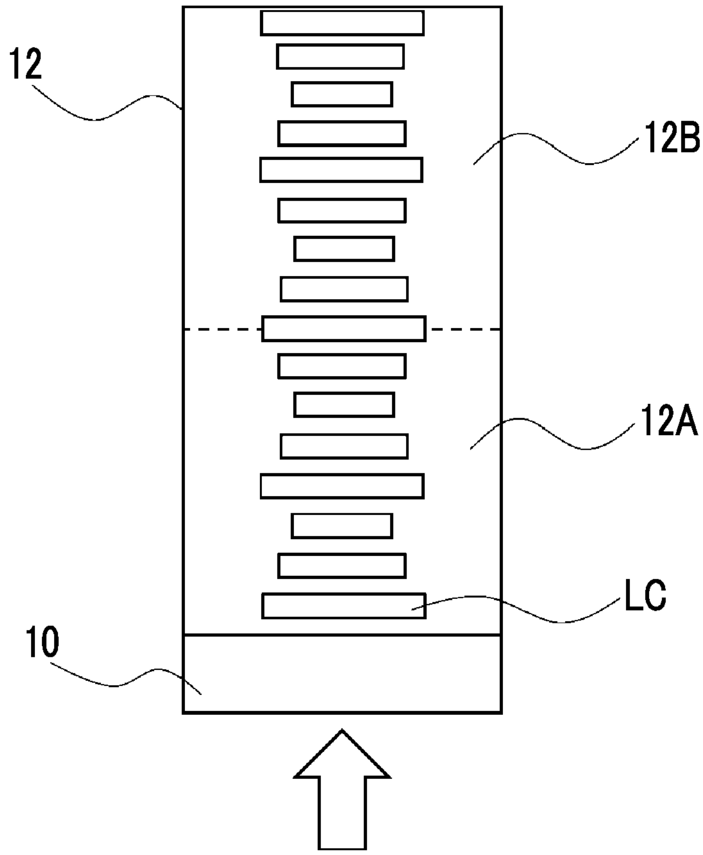

FIG. 2

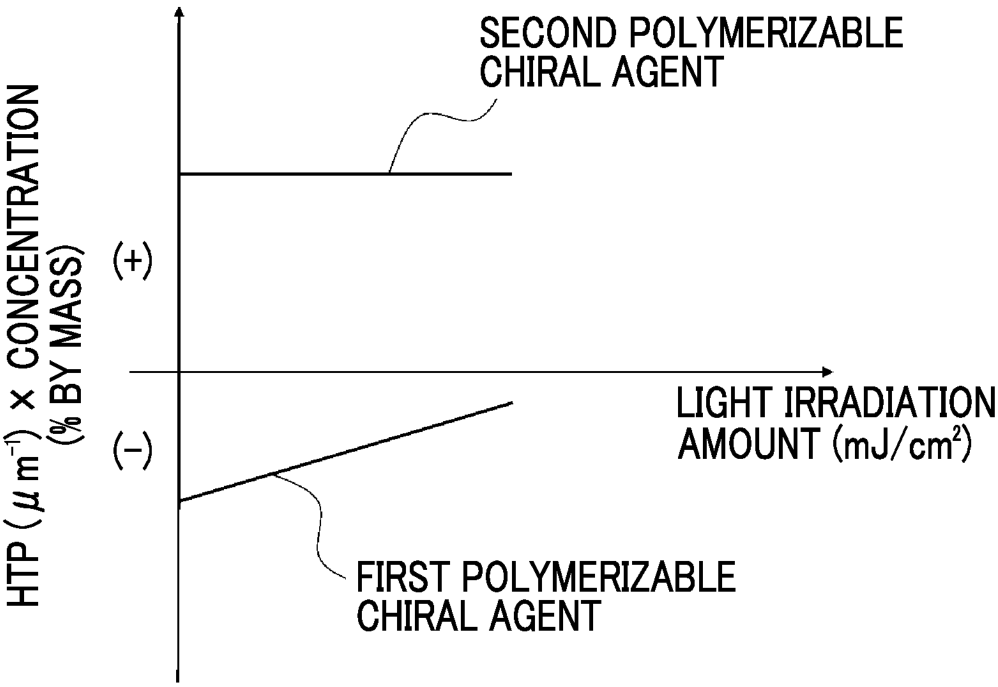
SECOND POLYMERIZABLE CHIRAL AGENT
HTP (μm⁻¹) × CONCENTRATION (% BY MASS)
(+)
(−)
LIGHT IRRADIATION AMOUNT (mJ/cm²)
FIRST POLYMERIZABLE CHIRAL AGENT

FIG. 3

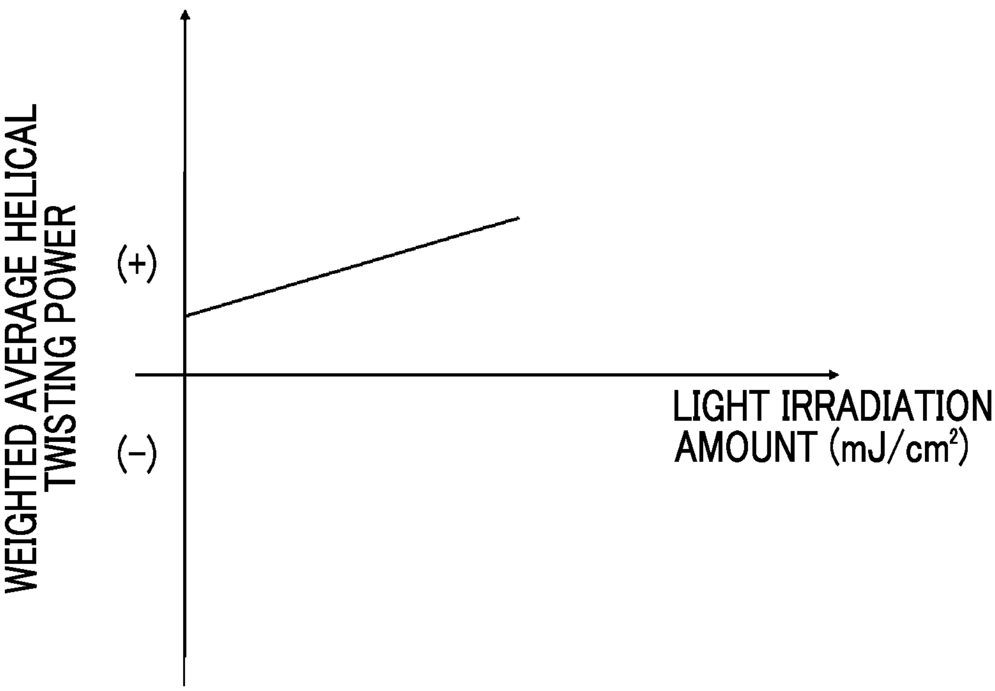
WEIGHTED AVERAGE HELICAL TWISTING POWER
(+)
(−)
LIGHT IRRADIATION AMOUNT (mJ/cm²)

FIG. 4

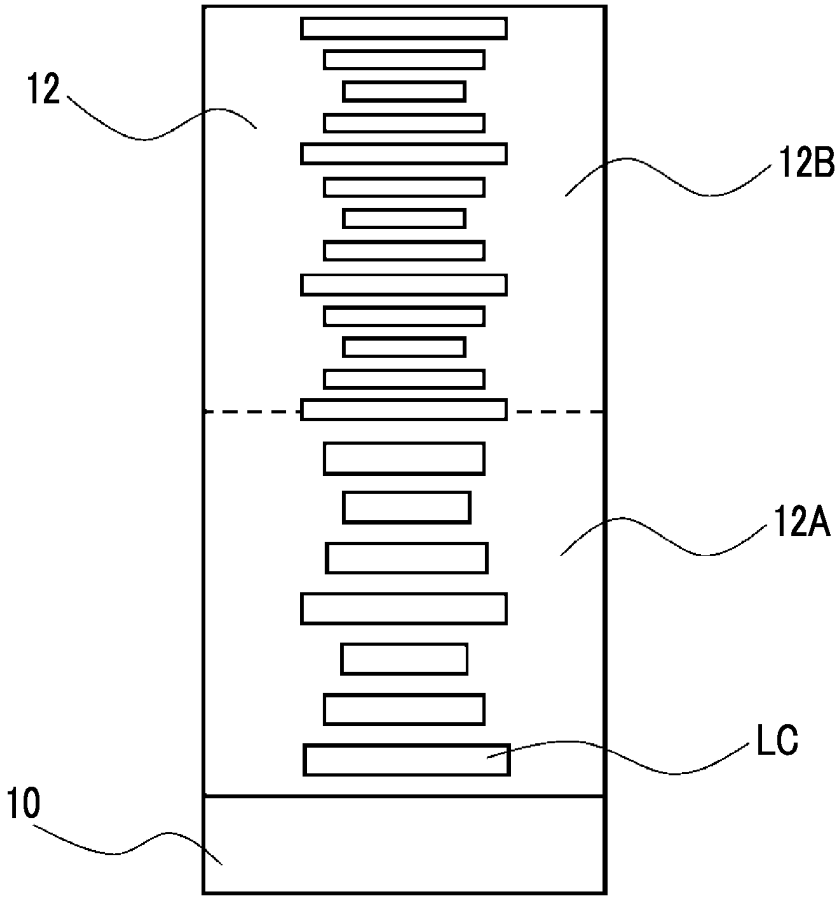
12
12B
12A
LC
10

FIG. 5

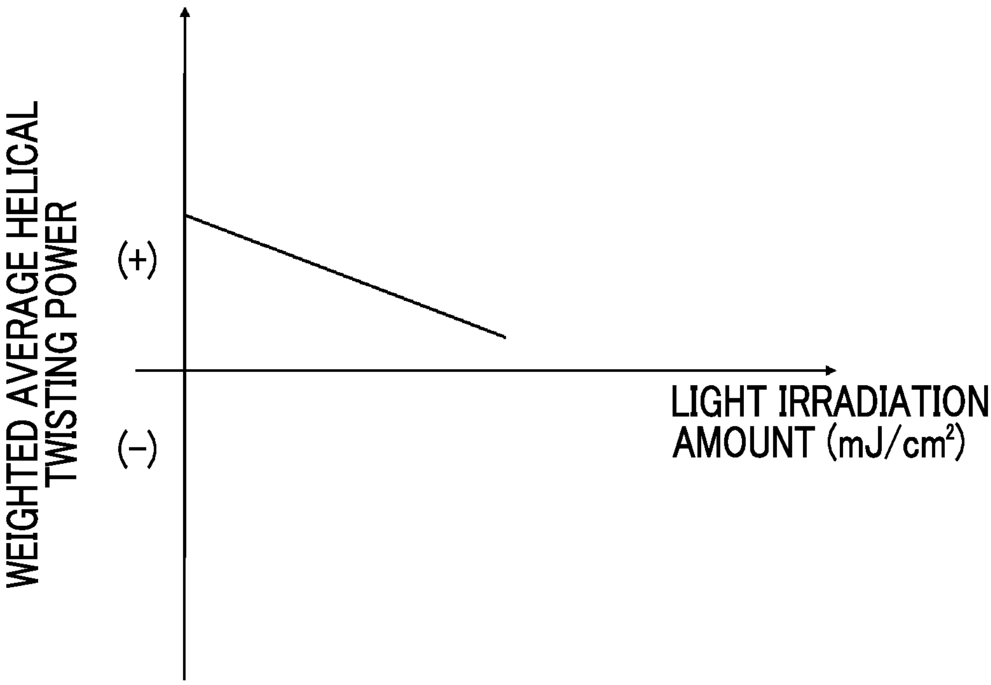
WEIGHTED AVERAGE HELICAL TWISTING POWER
(+)
(−)
LIGHT IRRADIATION AMOUNT (mJ/cm²)

FIG. 6

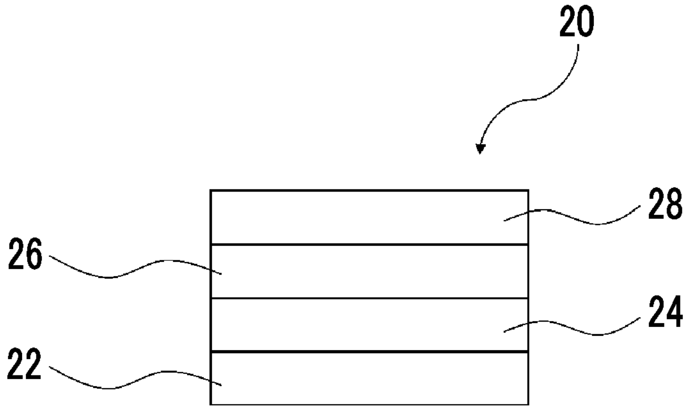


FIG. 7

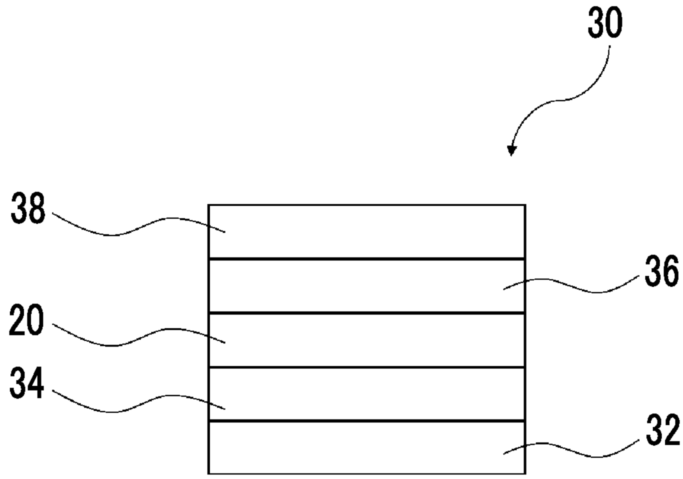


FIG. 8

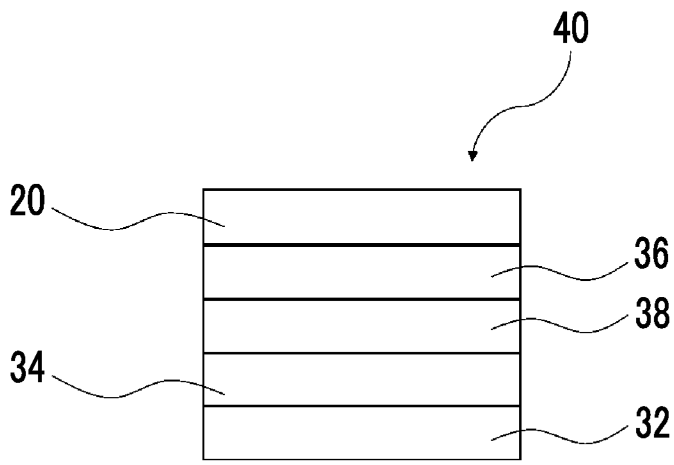

FIG. 9

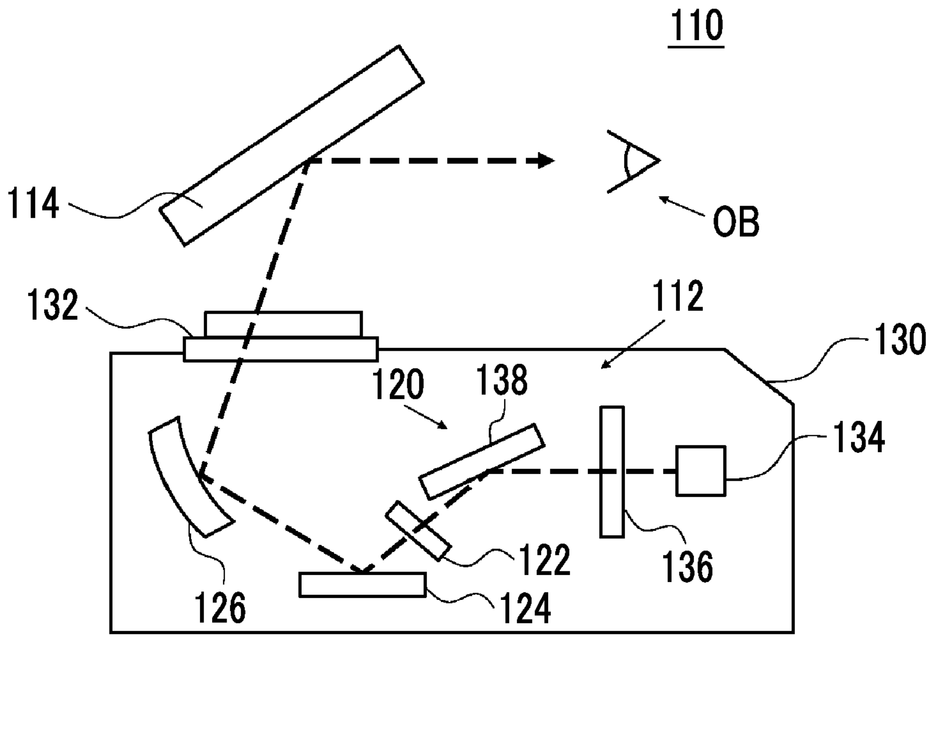

## INTERNATIONAL SEARCH REPORT

International application No.
**PCT/JP2024/026182**

**A. CLASSIFICATION OF SUBJECT MATTER**

***G02B 5/30***(2006.01)i

According to International Patent Classification (IPC) or to both national classification and IPC

**B. FIELDS SEARCHED**

Minimum documentation searched (classification system followed by classification symbols)

G02B5/30

Documentation searched other than minimum documentation to the extent that such documents are included in the fields searched

Published examined utility model applications of Japan 1922-1996
Published unexamined utility model applications of Japan 1971-2024
Registered utility model specifications of Japan 1996-2024
Published registered utility model applications of Japan 1994-2024

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| X | WO 2022/030266 A1 (FUJIFILM CORPORATION) 10 February 2022 (2022-02-10) paragraphs [0018]-[0097], [0115], [0202], [0210]-[0211], fig. 3-7 | 1, 7, 18 |
| Y | paragraphs [0018]-[0097], [0115], [0202], [0210]-[0211], fig. 3-7 | 1-6, 8-17 |
| Y | WO 2019/073974 A1 (FUJIFILM CORPORATION) 18 April 2019 (2019-04-18) paragraph [0102] | 1-6 |
| Y | WO 2019/182052 A1 (FUJIFILM CORPORATION) 26 September 2019 (2019-09-26) paragraph [0129] | 2-6 |
| Y | JP 2022-172201 A (FUJIFILM CORPORATION) 15 November 2022 (2022-11-15) paragraphs [0028], [0079], [0088], [0129], [0153] | 8-17 |
| A | JP 2007-504484 A (MERCK PATENT G.M.B.H.) 01 March 2007 (2007-03-01) | 1-18 |
| A | JP 2002-286935 A (DAI NIPPON PRINTING CO., LTD.) 03 October 2002 (2002-10-03) | 1-18 |
| A | JP 2004-318066 A (NITTO DENKO CORPORATION) 11 November 2004 (2004-11-11) | 1-18 |

☐ Further documents are listed in the continuation of Box C. ☑ See patent family annex.

* Special categories of cited documents:
"A" document defining the general state of the art which is not considered to be of particular relevance
"D" document cited by the applicant in the international application
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| **04 September 2024** | **08 October 2024** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | Telephone No. |

Form PCT/ISA/210 (second sheet) (July 2022)

**INTERNATIONAL SEARCH REPORT**
**Information on patent family members**

International application No.
**PCT/JP2024/026182**

| Patent document cited in search report | Publication date (day/month/year) | Patent family member(s) | Publication date (day/month/year) |
|---|---|---|---|
| WO 2022/030266 A1 | 10 February 2022 | KR 10-2023-0031360 A<br>CN 116113858 A | |
| WO 2019/073974 A1 | 18 April 2019 | US 2020/0225387 A1<br>paragraph [0221]<br>CN 111344610 A | |
| WO 2019/182052 A1 | 26 September 2019 | US 2020/0409202 A1<br>paragraph [0375]<br>EP 3770656 A1<br>CN 111902749 A | |
| JP 2022-172201 A | 15 November 2022 | US 2020/0209619 A1<br>paragraphs [0067]-[0070], [0180]-[0181], [0199], [0299]-[0300], [0360]<br>EP 3680700 A1<br>CN 111051961 A | |
| JP 2007-504484 A | 01 March 2007 | GB 2420563 A<br>WO 2005/019379 A1<br>TW 200513516 A | |
| JP 2002-286935 A | 03 October 2002 | US 2002/0167627 A1<br>EP 1245970 A2<br>DE 60220116 T2<br>TW 584767 B<br>KR 10-2002-0077102 A<br>CN 1387055 A | |
| JP 2004-318066 A | 11 November 2004 | WO 2004/088367 A1<br>TW 200502595 A | |

Form PCT/ISA/210 (patent family annex) (July 2022)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- WO 2022030266 A
- JP 2001159709 A
- JP 2002179669 A
- JP 2002179633 A
- JP 2002179670 A
- JP 2002179668 A
- JP 2002180051 A
- JP 2002338575 A
- JP 2002080478 A
- JP 2002080851 A
- JP 2002179681 A
- JP 2002302487 A
- JP 2002338668 A
- JP 2003055315 A
- JP 2003073381 A
- JP 2003306490 A
- JP 2003306491 A
- JP 2003313187 A
- JP 2003313188 A
- JP 2003313189 A
- JP 2003313292 A
- WO 2018194157 A
- JP 2002179682 A
- US 4683327 A
- US 5622648 A
- US 5770107 A
- WO 95022586 A
- WO 95024455 A
- WO 9700600 A
- WO 9823580 A
- WO 9852905 A
- JP 1272551 A
- JP H1272551 A
- JP 6016616 A
- JP H6016616 A
- JP 7110469 A
- JP H7110469 A
- JP 11080081 A
- JP H11080081 A
- JP 2001328973 A
- JP 2001330725 A
- JP 2003295212 A
- JP 2007272185 A
- JP 2012203237 A
- JP 2013113913 A
- JP 8338913 A
- JP H8338913 A
- JP 9506837 A
- JP H9506837 A


### Non-patent literature cited in the description


- Liquid Crystal Handbook. Maruzen Co., Ltd., 196
- **KINGO UCHIDA** ; **MASAHIRO IRIE**. *Chemical Industry*, 1999, vol. 64, 640
- **KINGO UCHIDA** ; **MASAHIRO IRIE**. *Fine Chemical*, 1999, vol. 28 (9), 15
- **HIROYUKI NOHIRA**. Chemical Review. *Chemistry of Liquid Crystals*, 1994 (22), 73
- *Makromol. Chem*, 1989, vol. 190, 2255
- *Advanced Material*, 1993, vol. 5, 107